# EUROPÄISCHE PATENTSCHRIFT

(11) **EP 3 308 051 B1**
(45) Veröffentlichungstag und Bekanntmachung des Hinweises auf die Patenterteilung: **17.03.2021**
(21) Anmeldenummer: 16728960.2
(22) Anmeldetag: 14.06.2016
(51) Int. Cl.: F16D 65/097, F16D 55/226, F16D 65/18

(54) **SCHEIBENBREMSE FÜR EIN NUTZFAHRZEUG UND BREMSBELAGSATZ**
DISK BRAKE FOR A COMMERCIAL VEHICLE AND BRAKE PAD SET
FREIN À DISQUE POUR VÉHICULE UTILITAIRE ET JEU DE GARNITURES DE FREIN

(30) Priorität: 15.06.2015 DE 102015109540; 09.10.2015 DE 102015117285; 17.03.2016 DE 102016104970
(43) Veröffentlichungstag der Anmeldung: 18.04.2018
(73) Patentinhaber: KNORR-BREMSE Systeme für Nutzfahrzeuge GmbH, 80809 München (DE)
(72) Erfinder: FRICKE, Jens, 94474 Vilshofen (DE); RGUICHI, Abdelaziz, 82140 Olching (DE); EICHLER, Thomas, 80803 München (DE); KRAUSE, Oliver, 82515 Wolfratshausen (DE); KLINGNER, Matthias, 82272 Moorenweis (DE); PESCHEL, Michael, 82296 Schöngeising (DE); SCHÖFBERGER, Tobias, 84048 Mainburg (DE); ADAMCZYK, Philipp, 87677 Stöttwang (DE); SCHÖNAUER, Manfred, 80995 München (DE)
(86) Internationale Anmeldenummer: PCT/EP2016/063610
(87) Internationale Veröffentlichungsnummer: WO 2016/202789

(56) Entgegenhaltungen:
- WO-A1-96/08663
- CN-A- 101 498 346
- DE-A1-102009 009 567
- JP-A- S57 179 435
- US-A- 4 491 204
- US-A1- 2012 085 597

## Beschreibung

Die Erfindung betrifft eine Scheibenbremse für ein Nutzfahrzeug nach dem Oberbegriff des Anspruchs 1. Die Erfindung bezieht sich auch auf einen Bremsbelagsatz.

Bei einer gattungsgemäßen, auch als Schiebesattel-Bremse bekannten Scheibenbremse wird im Fall einer Bremsung mittels einer Zuspanneinrichtung, die pneumatisch oder elektromotorisch betätigbar ist, ein aktionsseitiger Bremsbelag gegen eine fahrzeugseitige Bremsscheibe gepresst. Im weiteren Verlauf des Bremsvorgangs wird der Bremssattel, bezogen auf die Bremsscheibe, entgegen der Zuspannrichtung des aktionsseitigen Bremsbelages verschoben unter Mitnahme und Anpressen des gegenüberliegenden, reaktionsseitigen Bremsbelages an die andere Seite der Bremsscheibe.

Nach einem Lösen der Bremse verbleibt bei der bekannten Scheibenbremse der Bremssattel in dieser Position, in der die Bremsbeläge, zumindest aber der reaktionsseitige Bremsbelag zwar drucklos, jedoch schleifend an der Bremsscheibe anliegt. Die dadurch im Fahrbetrieb auftretenden Restschleifmomente der Bremsbeläge wirken sich insofern nachteilig aus als sie zu einem erhöhten Kraftstoffverbrauch führen ebenso wie zu einer Verringerung der Standzeit der beteiligten Bauteile, nämlich der Bremsscheibe und der Bremsbeläge.

Zwar erfolgt ein geringes Lösen der Bremsbeläge im Fahrbetrieb beispielsweise durch einen Taumelschlag der Bremsscheibe sowie durch Erschütterungen und Querbeschleunigungen bei Kurvenfahrten. Diese Effekte sind jedoch nicht ausreichend, um die genannten Restschleifmomente wirksam zu verhindern.

Um diesem Problem zu begegnen, ist in der gattungsgemäßen DE 10 2007 001 213 eine Scheibenbremse offenbart mit einer Rückstelleinrichtung, die in einem der Führungsholme, über die der Bremssattel verschiebbar am Bremsträger gehalten ist, angeordnet ist und die ein federndes Rückstellelement aufweist, durch das der Bremssattel in eine Ausgangsstellung verschoben wird.

Prinzipiell hat sich diese Konstruktion bewährt. Jedoch kann der Einsatz dieser bekannten Rückstelleinrichtung bei druckluftbetätigten Scheibenbremsen schwerer Nutzfahrzeuge zu Problemen führen, da hier weite Grenzen variabler Einflüsse durch Bauteiltoleranzen und Bauteildeformationen wirksam sind, die eine sichere Funktion dieser Rückstelleinrichtung nicht in jedem Fall zulassen.

Vergleichbare Probleme ergeben sich bei einer Scheibenbremse wie sie in der DE 10 2012 006 111 A1 thematisiert ist. Dabei ist eine Rückstelleinrichtung auf der der Zuspanneinrichtung gegenüberliegenden, dem reaktionsseitigen Bremsbelag zugewandten Seite angeordnet, wodurch eine wirksame, insbesondere automatische Rückstellung des Bremssattels erreicht wird, bei gleichzeitig minimalstem Eingriff in die Systemsteifigkeit.

In jedem Fall wirkt die Rückstelleinrichtung auf den Bremssattel, wobei der Bremsträger als Widerlager fungiert.

Die DE 43 01 621 A1 beschreibt eine Schwimmsattel-Scheibenbremse mit einem ortsfesten Bremsträger, der zwei über den äußeren Rand einer Bremsscheibe ragende Trägerarme aufweist, mit beiderseits der Bremsscheibe angeordneten, je einen Reibbelag und eine Rückenplatte aufweisenden Bremsbacken, die an den Trägerarmen verschiebbar abgestützt sind, mit einem am Bremsträger axial verschiebbar geführten Schwimmsattel, der die Bremsbacken umgreift und einen zum Andruck der Bremsbacken an die Bremsscheibe bestimmte Betätigungsvorrichtung aufweist, mit einer auf die Bremsbacken axial in Bremslöserichtung einwirkenden Federanordnung, die nach dem Bremsen das Einstellen eines Lüftspiels zwischen Bremsbacken und Bremsscheibe unterstützt. Die Federanordnung weist zumindest eine Spreizfeder auf, die an einem Trägerarm des Bremsträgers in axialer Richtung insgesamt unverschiebbar befestigt ist, dass die Befestigung an einem über dem äußeren Rand der Bremsscheibe befindlichen Abschnitt des Trägerarms erfolgt, und dass die Spreizfeder zumindest zwei Federarme aufweist, die an den Rückplatten der Bremsbacken in axialer Richtung federnd anliegen.

Die US2014/0339026 A1 beschreibt eine Spreizfeder, umfassend einen Verriegelungsarm, der die Spreizfeder mit einem Bremskomponente verbindet, einen Rückzugarm; und eine Vorspanneinrichtung, die zwischen dem Verriegelungsarm und dem Rückholarm angeordnet ist, wobei die Vorspannvorrichtung sechs spiralförmige Schleifen oder mehr umfasst, die Energie während einer Bremsenaktivierung speichern und sobald der Bremsvorgang abgeschlossen ist, die Bremskomponenten (Bremsbelag) zurückziehen. Es wird ein Bremssattel in Form eines Faustsattels, welcher kein Schiebesattel ist, angegeben. Dieser ist für ein Personenfahrzeug geeignet, jedoch nicht für ein Nutzfahrzeug 11

Weitere Rückstelleinrichtungen mit Spreizfeder sind aus der US4491204 A und WO96/08663A1 bekannt.

Der Erfindung liegt die Aufgabe zugrunde, eine Scheibenbremse der gattungsgemäßen Art so weiterzuentwickeln, dass mit konstruktiv einfachsten Mitteln die Standzeit insbesondere der Bremsbeläge und der Bremsscheibe erhöht und die Betriebskosten insgesamt gesenkt werden.

Eine weitere Aufgabe besteht darin, einen entsprechenden Bremsbelagsatz bereitzustellen.

Diese Aufgabe wird durch eine Scheibenbremse mit den Merkmalen des Anspruchs 1 gelöst.

Die weitere Aufgabe wird durch einen Bremsbelagsatz mit den Merkmalen des Anspruchs 27 gelöst.

Eine erfindungsgemäße Scheibenbremse für ein Nutzfahrzeug, mit einem eine Bremsscheibe übergreifenden, als Schiebesattel ausgebildeten Bremssattel, der an einem ortsfesten Bremsträger befestigt ist und eine zentrale Öffnung über der Bremsscheibe aufweist, umfasst zwei im Bremssattel angeordnete, gegensinnig bewegbare, jeweils eine Belagträgerplatte und einen darauf befestigten Reibbelag aufweisende Bremsbeläge, von denen ein aktionsseitiger bzw. zuspannseitiger Bremsbelag mittels einer Zuspanneinrichtung über mindestens einen Bremsstempel gegen die Bremsscheibe pressbar ist, sowie mindestens eine Rückstelleinrichtung, mit der der Bremssattel nach einem bremsbedingten Verschieben und Lösen der Bremse rückführbar ist, wobei die Rückstelleinrichtung eine an den sich gegenüberliegenden Bremsbelägen angreifenden, entgegen der jeweiligen Zuspannrichtung gleich wirkenden Spreizeinrichtung mit an der jeweiligen Belagträgerplatte angreifenden federnden Spreizelementen aufweist. Die Spreizeinrichtung ist in der zentralen Öffnung angeordnet, wobei die Spreizelemente direkt oder indirekt außerhalb der Reibbeläge an mindestens zwei zur Mitte abständig zueinander angeordneten Anlagebereichen der Bremsbeläge angreifen, wobei die Anlagebereiche jeweils eine Anlagefläche und eine Auflagefläche aufweisen, an welchen die Spreizelemente bewegbar angeordnet sind.

Durch die erfindungsgemäße Ausgestaltung der Scheibenbremse wird eine synchrone Rückstellung beider Bremsbeläge sowie einer Rückstellung des Bremssattels bei gelöster Bremse erreicht, wobei die Synchronität sowohl die Rückstellkräfte wie auch die Rückstellwege betrifft. Dabei wirkt die Rückstellkraft entgegen der jeweiligen Zuspannrichtung der beiden Bremsbeläge, also beim reaktionsseitigen Bremsbelag zum Sattelrücken hin und beim aktionsseitigen Bremsbelag zum Sattelkopf hin, unter Spaltbildungen gegenüber der Bremsscheibe.

Der Angriff der Spreizeinrichtung an den beiden Bremsbelägen erfolgt zweckmäßigerweise an den Belagträgerplatten und zwar auf der dem daran befestigten Reibbelag zugewandten Seite oder an der gegenüberliegenden Rückenseite. Um ein Verkanten des jeweiligen Bremsbelages bei der Rückstellung zu vermeiden, greift das Spreizelement entweder zentral, an einem oberen frei liegenden Randbereich der Belagträgerplatte an oder symmetrisch an zwei Anlagebereichen rechts und links.

Ein erfindungsgemäßer Bremsbelagsatz für die erfindungsgemäße Scheibenbremse weist mindestens zwei Bremsbeläge mit jeweils einer Belagträgerplatte und einem auf der Belagträgerplatte angebrachten Reibbelag und die oben angegebene Spreizeinrichtung auf. Die Belagträgerplatte weisen außerhalb der Reibbeläge an mindestens zwei zur Mitte abständig zueinander angeordneten Anlagebereichen jeweils eine Anlagefläche und eine Auflagefläche auf. Damit ergibt sich der Vorteil, mehrere Funktionen (axiale und radiale Federkraftübertragung, Federendeführung) auf engem Raum zu realisieren.

In einer Ausführung erstrecken sich die Spreizelemente ausgehend von einem zentralen Bereich in der Mitte der Öffnung von innen nach außen zu den zur Mitte abständig zueinander angeordneten Anlagebereichen. Es ist auch möglich, dass sich die Spreizelemente ausgehend von einem zentralen Bereich in der Mitte der Öffnung von innen nach außen zu den gleichmäßig zur Mitte abständig zueinander angeordneten Anlagebereichen erstrecken.

Auf diese Weise ist die Spreizeinrichtung mittig im Bremssattel angeordnet, wobei sie ebenfalls innerhalb einer Hüllkurve einer Felge eines zugeordneten Rades angeordnet ist.

Die beiden Spreizelemente sind mittig (in Bezug auf die Trägerhörner) miteinander verbunden. Somit kann eine - in einem kleinen Toleranzbereich - gleiche Federkraft sowohl einlaufseitig als auch auslaufseitig sichergestellt werden. Unterschiedliche Federkräfte zwischen Auslauf- und Einlaufseite, die zu Schrägverschleiß führen können, werden durch das einseitige Angreifen je einer Feder pro Belag minimiert

Eine weitere Ausführung sieht vor, dass der sich der zentrale Bereich der Öffnung beiderseits einer virtuellen Mitte der Öffnung in etwa parallel zu der Ebene der Bremsscheibe in einer Länge in einem Bereich von 30 bis 50 % einer Längsachse der Öffnung erstreckt. Damit ergibt sich eine vorteilhafte Anpassung der Federkräfte.

Erfindungsgemäß weist die Spreizeinrichtung Federarme auf, von denen jeweils zwei an einer zugeordneten Belagträgerplatte anliegen, wobei die Federarme in dem zentralen Bereich der Öffnung miteinander verbunden sind, was einen Einbau bei Montage und Wartung vereinfacht.

Nach einem weiteren Gedanken der Erfindung weist die Spreizeinrichtung gegensinnig wirkende Spreizelemente auf, vorzugsweise elastisch wirkend, insbesondere in Form von Federelementen.

Nach einem Gedanken der Erfindung steht die Spreizeinrichtung mit dem Bremsträger in Wirkverbindung, der ein Widerlager bildet und in dem die Bremsbeläge achsgleich zur Bremsscheibe verschiebbar gelagert sind.

Hierzu ist erfindungsgemäß ein Haltebogen vorgesehen, der die Bremsscheibe im Umfangsbereich, bis zu beidseitig einen Belagschacht begrenzenden Bremsträgerhörnern des Bremsträgers überspannt und, bezogen auf die Dicke der Bremsscheibe, mittig dazu angeordnet ist. Der Haltebogen ist kein Belaghaltebügel, sondern ein zusätzliches Bauteil.

Der Haltebogen kann in einer Ausführung an zwei sich gegenüberliegenden, mit dem Bremsträger verbundenen Bügeln angeschlossen sein, was eine einfache Anbindung ermöglicht.

Alternativ kann der Haltebogen an mindestens die zwei Bremsträgerhörnern eines Belagschachtes angeschlossen sein, während die an beiden Bremsbelägen angreifenden Spreizelemente mit dem Haltebogen verbunden sind. Dieser bildet somit eine Zentriereinrichtung, die in Korrespondenz mit dem Bremsträger als Fixlager konstruktiv auch anders verwirklicht werden kann.

Bevorzugt ist der Haltebogen in seiner Kontur C-förmig ausgebildet, mit einem die Bremsscheibe im erwähnten Maß überspannenden Mittelschenkel und zwei dazu gleichgerichtet zu den Bremsträgerhörnern hin abgewinkelten Endschenkein, von denen jeweils einer an einem Bremsträgerhorn des entsprechenden Belagschachtes befestigt ist.

Alternativ können die Endschenkel jeweils eine Lasche aufweisen, in die Zapfen der Bremsträgerhörner eingesteckt sind. Damit wird ein einfacher Einbau erzielt. Natürlich können die Zapfen auch separat in den Bremsträgerhörnern vorher eingesetzt sein, wobei die Laschen entsprechende Löcher aufweisen.

Mittels des Haltebogens, an dem die Spreizeinrichtung mit ihren Federarmen befestigt ist, erfolgt eine automatische Zentrierung des Bremssattels nach einem Lösen der Bremse, also nach Beenden eines Bremsvorgangs, wobei durch die insoweit fixierte Positionierung der Spreizeinrichtung die Bremsbeläge derart zurückgestellt werden, dass sich der Bremssattel gegenüber der Bremsscheibe zentriert.

Im Übrigen ist die Spreizeinrichtung so ausgelegt, dass sie über das komplette Verschleißmaß der Bremsbeläge wirksam ist.

Da sich mit zunehmendem Verschleiß die Kraftangriffspunkte an den Bremsbelägen verändern, sind die die Bremsbeläge kontaktierenden Funktionsteile der Spreizeinrichtung so ausgebildet, dass sie sich gleitend an der Belagträgerplatte der jeweiligen Bremsbeläge abstützen.

Um eine sichere Halterung der Federschenkel bzw. bei einer anderen konstruktiven Variante der Federarme auch bei Rüttelbelastung im Fahrbetrieb zu gewährleisten, stützen sich die Federarme an der, bezogen auf den Grund des Belagschachtes, oberen Kante der Belagträgerplatte ab, ebenfalls, wie vorbeschrieben gleitend.

Bei entsprechender Auslegung der Spreizeinrichtung kann überdies auf den Einsatz von Belaghaltefedern verzichtet werden, die, wie aus dem Stand der Technik bekannt, am oberen Rand der Belagträgerplatten befestigt sind und an denen sich ein Belaghaltebügel abstützt, so dass der jeweilige Bremsbelag unter Vorspannung im Belagschacht des Bremsträgers gehalten ist.

Die bauliche Realisierung der erfindungsgemäßen Spreizeinrichtung kann konstruktiv unterschiedlich sein, wobei sich ein wesentlicher Vorteil daraus ergibt, dass auf bewegliche Bauteile im Wesentlichen verzichtet werden kann, mit Ausnahme natürlich der federnden Spreizelemente, die zur Funktion eine federnde Auslenkung vollführen.

Der nun mögliche Verzicht auf bewegliche Teile wirkt sich naturgemäß standzeiterhöhend auf die Spreizeinrichtung aus, ebenso wie die geringe Anzahl notwendiger Bauteile, wodurch sich überdies eine äußerst kostengünstige Herstellung und Montage ergibt.

Erfindungsgemäß sind die Federarme als zwei Paare von Federarmen ausgebildet, wobei die Paare sich gegenüberliegend in Querrichtung der Öffnung so angeordnet sind, dass sie mit inneren Enden, die zur Mitte der Öffnung weisen, an dem Haltebogen befestigt sind, wobei ihre äußeren freien Enden mit den Belagträgerplatte der Bremsbeläge zusammenwirken. Dies ergibt einen kompakten und effektiven Aufbau.

Erfindungsgemäß sind hierbei die inneren Enden eines jeden Paares von Federarmen jeweils mit einem Haubenverbinder in Hülsenform verbunden, wobei der Haubenverbinder um einen Zentralabschnitt des Haltebogens umgebogen und an dem Zentralabschnitt, welcher einen kreisförmigen Querschnitt aufweist, drehbar und verschiebbar angebracht sind. Hiermit sind die Federarme vorteilhaft als Paare unabhängig voneinander bewegbar an dem Haltebogen angeordnet.

Erfindungsgemäß ist jeder Federarm endseitig mit einem Druckabschnitt ausgebildet, welcher in seiner Längsrichtung mit einem Langloch ausgebildet ist, das ein Führungsabschnitt des Federarms der Spreizeinrichtung ist. Dadurch kann eine weitere relative Bewegungsmöglichkeit erreicht werden.

Außerdem liegt hierbei jeder Druckabschnitt jeweils auf einer Auflagefläche einer jeweiligen Belagträgerplatte auf, wobei die Langlöcher eines jeden Druckabschnitts jeweils mit einer Anlagefläche der Belagrückenplatte in Zusammenwirkung stehen. Dies ergibt eine vorteilhafte Führung in Radialrichtung.

Für eine verbesserte weitere Führung ist erfindungsgemäß ein mit der Belagträgerplatte fest verbundener Stift vorgesehen, der die mit dem jeweiligen Langloch in Zusammenwirkung stehende Anlagefläche der Belagträgerplatte aufweist, wobei die Auflageflächen jeweils tangential zu der Bremsscheibe verlaufen und einer Ebene liegen.
- Die Spreizeinrichtung umfasst zwei Spreizelemente, wobei ein erstes Spreizelement auf einen ersten Belag und ein zweites Spreizelement auf einen zweiten Belag wirkt. Die beiden Spreizelemente sind mittig (in Bezug auf die Trägerhörner) miteinander verbunden. Somit kann eine - in einem kleinen Toleranzbereich - gleiche Federkraft sowohl einlaufseitig als auch auslaufseitig sichergestellt werden. Unterschiedliche Federkräfte zwischen Auslauf- und Einlaufseite, die zu Schrägverschleiß führen können, werden durch das einseitige Angreifen je einer Feder pro Belag minimiert
- Eine gleichmäßige Kraftaufbringung der Federn aktionsseitig und reaktionsseitig, bzw. auf der Druckstück- und Sattelseite, kann durch eine flexible Einstellung des Mittelstegs realisiert werden. Weiterhin können durch den flexiblen Mittelsteg geringe geometrische Fehlstellungen von Scheibe, Belag und Träger ausgeglichen werden.
- Durch den Mittelsteg kann die aktive Rückstelleinrichtung leicht positioniert und durch den Belaghaltebügel niedergehalten werden. Vorteilhaft kann bei einem Belagwechsel das die Rückstelleinrichtung problemlos entnommen und mitgetauscht werden.
- Durch die Ausnutzung des gesamten Belagschachtes zwischen den Trägerhörner können Spreizelemente beziehungsweise Federn mit einer sehr geringen Federrate genutzt werden, um bei Belagverschleiß ziemlich konstante Kräfte aufzubringen. Durch die langen Federwege können die Spreizelemente tolerant in Bezug auf Federkräfte sein. Die Federwege führen zu einer konstanten Federrate mit geringen Toleranzen
- In einer bevorzugten Ausführungsvariante werden lediglich zwei Federn verwendet.
- Die Spreizelemente können aus kostengünstigen und geometrisch flexiblen Blechen gebildet werden.
- Durch den Versatz mit unterschiedlichen Drehpunkten kann eine niedrigere Federrate abgebildet werden. Vorteilhaft sind keine vielen Windungen (kostenintensiv, platzraubend) nötig.

Weitere Vorteile sind:
Einstellbarkeit (der Zentrierung)
Pro Belagseite die Federkonstante anpassbar, wodurch unterschiedlich für innen/außen und an Umgebung - in Grenzen - besser anpassbar Einbau über mittleren Zentrierbügel - kompensiert ungleichen Kraftaufbau Evtl. "aktive" Sattelzentrierung
Aktive Belagbefederung durch "Gabel" am Ende der Spinne

Eine weitere Ausführung sieht vor, dass die Spreizeinrichtung zumindest ein zusätzliches Rückstellelement aufweist, welches zusätzlich zu dem Angriffspunkt/den Angriffspunkten der Federarme in einem weiteren Angriffspunkt an der jeweiligen Belagträgerplatte eines Bremsbelags angreift. Dies ist vorteilhaft, da auf diese Weise eine unterstützte Rückstellung der Bremsbeläge bewirkt werden kann. Ein Restschleifmoment kann damit verhindert werden.

Das zumindest eine Rückstellelement kann in einer Ausführung mit einem Abschnitt in einem unteren Bereich der Belagträgerplatte eines zuspannseitigen Bremsbelags auf einer Druckseite der Belagträgerplatte an einem Haltezapfen befestigt sein, wobei das zumindest eine Rückstellelement mit einem weiteren Abschnitt in einem unteren Bereich einer Bodenplatte eines Zuspannabschnitts des Bremssattels angebracht ist. Auf diese Weise kann vorteilhaft eine Zugkraft durch das Rückstellelement auf den Bremsbelag ausgeübt werden.

Hierbei kann das zumindest eine Rückstellelement als ein Federelement mit einem Zentralabschnitt, zwei Federarmen, zwei Befestigungsabschnitten mit jeweils einer U-förmigen Lasche ausgebildet sein, wobei der Zentralabschnitt an dem Haltezapfen der Belagträgerplatte befestigt ist, und wobei jeder Federarm mit dem Befestigungsabschnitt an der Bodenplatte angebracht ist. Dies ist eine einfache und kompakte Ausbildung. Die Befestigung an der Belagträgerplatte kann z.B. durch eine Krallverbindung an einem Pin der Belagträgerplatte schnell und einfach erfolgen.

In einer Variante können der Zentralabschnitt und die Federarme des Rückstellelementes aus einem Federdraht gebildet sind, wobei der Zentralabschnitt an einem Halter in einem unteren Bereich der Belagträgerplatte befestigt ist. Dies ergibt vorteilhaft eine Gewichtseinsparung.

In einer alternativen Ausführung kann das zumindest eine Rückstellelement einen ersten Federarm mit einem Einspannende und einer Verbindung, einen zweiten Federarm mit einer Verbindung und einen Befestigungsabschnitt mit einer Öffnung umfassen, wobei der erste Federarm an der Druckseite der Belagträgerplatte des zuspannseitigen Bremsbelags mit seinem Einspannende an einem Halter befestigt ist, wobei der zweite Federarm über eine Verbindung mit dem ersten Federarm verbunden und parallel zu diesem angeordnet ist, und wobei der Befestigungsabschnitt mit seiner Öffnung vor einer Öffnung einer Lageraufnahme des Bremsträgers koaxial zu dieser zwischen dem Bremsträger und einem Lagerholm des Bremssattels befestigt ist. So kann eine einfache ortsfeste Fixierung zwischen schon vorhandenen Bauteilen ermöglicht werden.

In einer noch weiteren Alternative kann das zumindest eine Rückstellelement mittig als ein zentrales Rückstellelement in vertikaler Richtung an der Druckseite der Belagträgerplatte des zuspannseitigen Bremsbelags angeordnet und sowohl an der Oberseite und der Unterseite der Belagträgerplatte befestigt ist, wobei eine ortsfeste Fixierung eines Endes des zentralen Rückstellelementes mittig an einem zuspannseitigen Brückenverbinder des Bremsträgers gebildet ist.

Hierzu können verschiedene Varianten ausgeführt sein. So kann das zumindest eine zentrale Rückstellelement zwei seitliche, parallel zueinander angeordnete Längsglieder aufweisen, deren obere Enden als Klemmabschnitte als Klammern die Oberseite der Belagträgerplatte fest umgreifen, wobei die beiden Längsglieder an ihren unteren Enden mit Klemmabschnitten versehen sind, die als Klammer die Unterseite der Belagträgerplatte fest umgreifen, wobei die Längsglieder in ihrem oberen Bereich durch einen Querverbinder verbunden sind, und in ihrem unteren Bereich jeweils durch einen Querverbinder mit jeweils einem weiteren Längsglied verbunden sind, wobei sich die beiden Längsglieder jeweils parallel zu den äußeren Längsgliedern nach oben erstrecken und an ihren oberen Enden mit einem Querverbinder verbunden sind, an welchem ein zentrales Längsglied angebracht ist und sich parallel zu den anderen Längsgliedern nach unten über die Klemmabschnitte hinaus erstreckt und in einem eigenen Klemmabschnitt endet, der an dem zuspannseitigen Brückenverbinder des Bremsträgers fixiert ist. Dies ermöglicht eine besonders einfache Montage ohne zusätzliche Bauteile.

Eine weitere Variante sieht vor, dass das zumindest eine Rückstellelement mittig als ein zentrales Rückstellelement in vertikaler Richtung an der Druckseite der Belagträgerplatte des zuspannseitigen Bremsbelags angeordnet und in einem Bereich der Unterseite der Belagträgerplatte befestigt ist, wobei eine ortsfeste Fixierung eines Endes des zentralen Rückstellelementes an einem zuspannseitigen Halteende eines Belaghaltebügels gebildet ist.

Hierbei kann das zumindest eine zentrale Rückstellelement einen drahtförmigen Federkörper mit zwei parallel zueinander angeordneten Längsgliedern aufweisen, wobei die Längsglieder durch einen Querverbinder verbunden sind, wobei der Querverbinder im unteren Bereich der Belagträgerplatte gehalten ist und Endabschnitte der Längsglieder des Federkörpers über eine Halterung an dem zuspannseitigen Halteende des Belaghaltebügels angebracht sind. Dieser Aufbau ist einfach und leicht.

Eine Alternative dazu sieht vor, dass das zumindest eine zentrale Rückstellelement einen drahtförmigen Federkörper mit zwei parallel zueinander angeordneten Längsglieder aufweist, wobei die Längsglieder durch einen Querverbinder verbunden sind, wobei der Querverbinder über eine Halterung und Endabschnitte der Längsglieder des Federkörpers im unteren Bereich der Belagträgerplatte gehalten sind.

Und in einer noch weiteren Alternative dazu kann das zumindest eine zentrale Rückstellelement einen drahtförmigen Federkörper mit einem Endabschnitt und einem Befestigungsabschnitt aufweisen, wobei der Endabschnitt im unteren Bereich der Belagträgerplatte gehalten ist und der Befestigungsabschnitt an dem zuspannseitigen Halteende des Belaghaltebügels angebracht ist.

Das zumindest eine zentrale Rückstellelement kann aber auch eine Federplatte mit einem Endabschnitt und einem Befestigungsabschnitt aufweisen, wobei der Endabschnitt im unteren Bereich der Belagträgerplatte gehalten ist und der Befestigungsabschnitt an dem zuspannseitigen Halteende des Belaghaltebügels angebracht ist.

Mit diesen Varianten ist eine besonders vorteilhafte Anpassung an unterschiedliche Einsatzfälle mit verschiedenen Federkräften möglich.

In einer noch anderen Ausführung kann das zumindest eine Rückstellelement mit einem Abschnitt in einem unteren Bereich der Belagträgerplatte des rückenseitigen Bremsbelags auf der Druckseite der Belagträgerplatte befestigt sein, wobei das zumindest eine Rückstellelement mit einem weiteren Abschnitt mit einem Bremsträgerhorn des ortsfesten Bremsträgers in Zusammenwirkung steht. Auf diese Weise kann auch der rückenseitige Bremsbelag mit einem geeigneten Rückstellelement in einfacher Weise versehen werden.

Hierbei kann das Rückstellelement einen Zentralabschnitt mit zwei Verbindungsabschnitten, zwei Federarme mit jeweils einem Federende, zwei weitere Verbindungsabschnitte und zwei weitere Federarme mit jeweils einem Klammerende umfassen, wobei der Zentralabschnitt mit den links und rechts an ihm angebrachten Verbindungsabschnitten und den daran jeweils angebrachten Federarmen in einem unteren Randbereich auf der Druckseite der Belagträgerplatte angeordnet sind, wobei die weiteren Verbindungsabschnitte in den unteren Eckbereichen auf der Druckseite der Belagträgerplatte angeordnet sind und mit den weiteren, vertikalen Federarmen, die sich jeweils in einem Seitenbereich auf der Druckseite der Belagträgerplatte erstrecken, verbunden sind, wobei die Klammerenden eines jeden weiteren Federarms einen schrägen Seitenabschnitt übergreifend an der Belagträgerplatte befestigt sind, und wobei die Federenden jeweils mit einem Bremsträgerhorn in Kontakt stehen. Es ist dabei von Vorteil, dass das Rückstellelement in einfacher Weise über Klammern an der Belagträgerplatte angebracht werden kann.

In einer noch weiteren Ausführung ist vorgesehen, dass die Spreizeinrichtung zumindest ein weiteres zusätzliches Rückstellelement aufweist, welches zwischen der Unterseite der Belagträgerplatte des rückenseitigen Bremsbelags und einem Sattelrücken des Bremssattels angeordnet ist. So kann der rückenseitige Bremsbelag mit Unterstützung des weiteren Rückstellelementes zurückgestellt werden, um ein Restschleifmoment zu verhindern.

Hierbei kann das zumindest eine weitere Rückstellelement als eine Art Blattfeder mit einem Federkörper mit jeweils einem Federende ausgebildet sein, wobei das eine Federende in einem unteren Bereich der rückenseitigen Belagträgerplatte auf deren Druckseite an einem Halteabschnitt angelenkt ist und das andere Federende an einem Befestigungsabschnitt des Sattelrückens des Bremssattels angelenkt ist. Auf diese Weise kann auch auf den rückenseitigen Bremsbelag eine Zugkraft ausgeübt werden.

In einer alternativen Ausführung weist die Spreizeinrichtung zumindest ein zusätzliches Rückstellelement mit zwei sich gegenüberliegen Federarmen auf, wobei jeder Federarm mit seinem oberen Ende jeweils an einem Zentralabschnitt über einen Verbindungsbogen angebracht ist, wobei der Zentralabschnitt des Rückstellelementes an einem Zentralabschnitt des Haltebogens der Spreizeinrichtung befestigt ist, und wobei jeweils ein freies Ende eines jeden Federarms mit jeweils einem Andruckschenkel mit der jeweiligen Belagträgerplatte eines jeden Bremsbelags in Kontakt steht. Dies ergibt einen einfachen Aufbau, wobei auf jeden Bremsbelag durch ein jeweiliges Rückstellelement eine Druckkraft ausgeübt wird, um eine Rückstelllung der Bremsbeläge zu unterstützen

Dazu kann vorgesehen sein, dass die zumindest zwei zusätzlichen Rückstellelemente jeweils in einem länglichen Zwischenraum zwischen einem Reibbelag und einer Belagseite der jeweiligen Belagträgerplatte angeordnet sind, wobei die Andruckschenkel jeweils mit der Belagseite der jeweiligen Belagträgerplatte in Kontakt stehen und jeweils eine Druckkraft in Richtung von der Bremsscheibe weg weisend auf die Bremsbeläge ausüben. Dies ist vorteilhaft, da die Bremsbeläge nicht oder nur in geringstem Maße verändert werden.

Eine weitere Ausführung sieht vor, dass im unteren Bereich einer jeden Belagträgerplatte zumindest ein Führungselement vorgesehen ist, welches einen Befestigungsabschnitt und einen daran befestigten Führungsabschnitt mit einem Auflageabschnitt aufweist, wobei das zumindest eine jeweilige Führungselement mit dem Befestigungsabschnitt auf der Druckseite der jeweiligen Belagträgerplatte derart befestigt ist, dass der jeweilige Auflageabschnitt auf dem jeweiligen Belagschachtboden aufliegt. Damit kann ein Kippen der Bremsbeläge beim Rückstellen vorteilhaft verhindert werden, da eine Auflagefläche der Bremsbeläge in den Belagschächten durch die Führungselemente vergrößert werden kann.

In einer weiteren Ausführung kann die Belagträgerplatte eines zuspannseitigen Bremsbelags mit zumindest einem Rückstellelement versehen sein. Auch damit kann eine Kodierung möglich sein.

So kann auch die Belagträgerplatte eines rückenseitigen Bremsbelags mit zumindest einem Rückstellelement versehen sein.

Eine Ausführung der Bremsbeläge sieht vor, dass jeweils ein länglicher Zwischenraum zwischen einem Reibbelag und einer Belagseite der jeweiligen Belagträgerplatte angeordnet ist, wodurch eine einfache Kontaktierung für die Federarme von weiteren Rückstellelementen geschaffen ist.

In einer weiteren Ausführung können die Belagträgerplatten im unteren Bereich auf ihren Druckseiten mit zumindest einem Führungselement versehen sein, wodurch ein Kippen vorteilhaft verhindert bzw. bedeutend verringert werden kann.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

### Es zeigen:

- Figuren 1-2: perspektivische Ansichten eines Ausführungsbeispiels einer erfindungsgemäßen Scheibenbremse mit einer Rückstelleinrichtung;
- Figur 3: eine perspektivische Ansicht einer ersten Funktionsgruppe der Rückstelleinrichtung des Ausführungsbeispiels der Scheibenbremse nach Figur 1;
- Figuren 4-6: schematische Detaildarstellungen der ersten Funktionsgruppe nach Figuren 1-3 in verschiedenen Teilansichten;
- Figuren 7-8: perspektivische Ansichten einer zweiten Funktionsgruppe der Rückstelleinrichtung des Ausführungsbeispiels der Scheibenbremse nach Figur 1;
- Figuren 9-17: perspektivische Ansichten von Varianten der zweiten Funktionsgruppe der Rückstelleinrichtung;
- Figur 18: eine schematische Schnittansicht einer weiteren Variante der zweiten Funktionsgruppe der Rückstelleinrichtung; und
- Figur 19: eine schematische Teilschnittansicht der erfindungsgemäßen Scheibenbremse nach Figur 1 mit Führungselementen.

Die Begriffe "oben", "unten", "links", "rechts" beziehen sich auf die jeweilige Anordnungen in den Figuren.

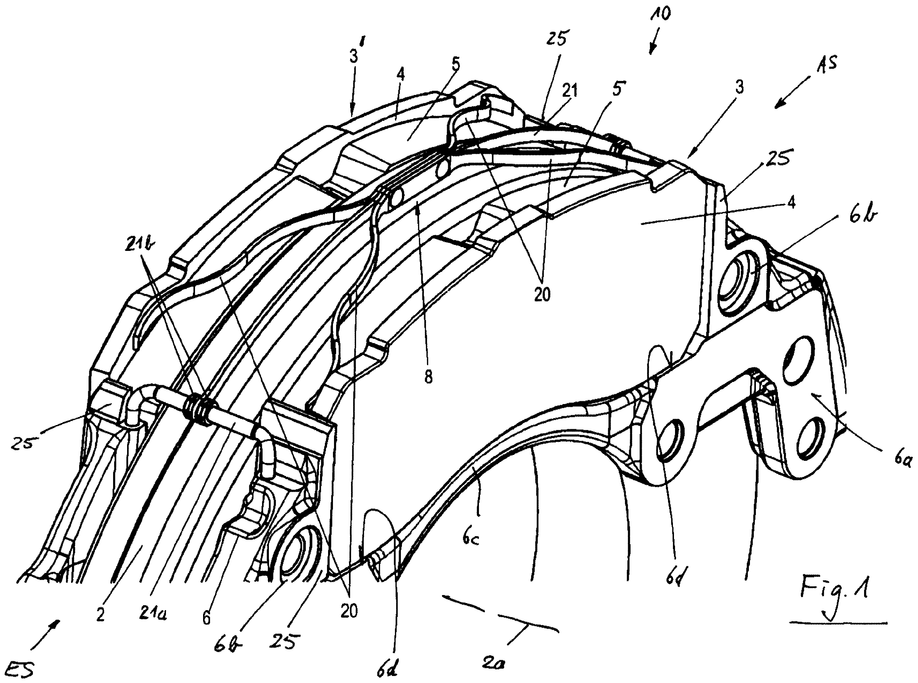

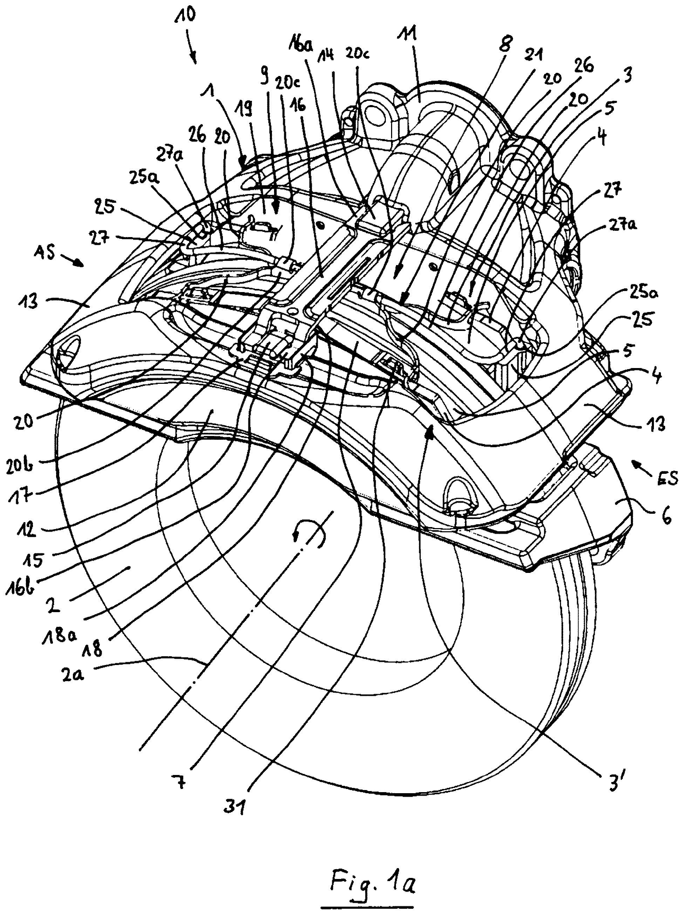

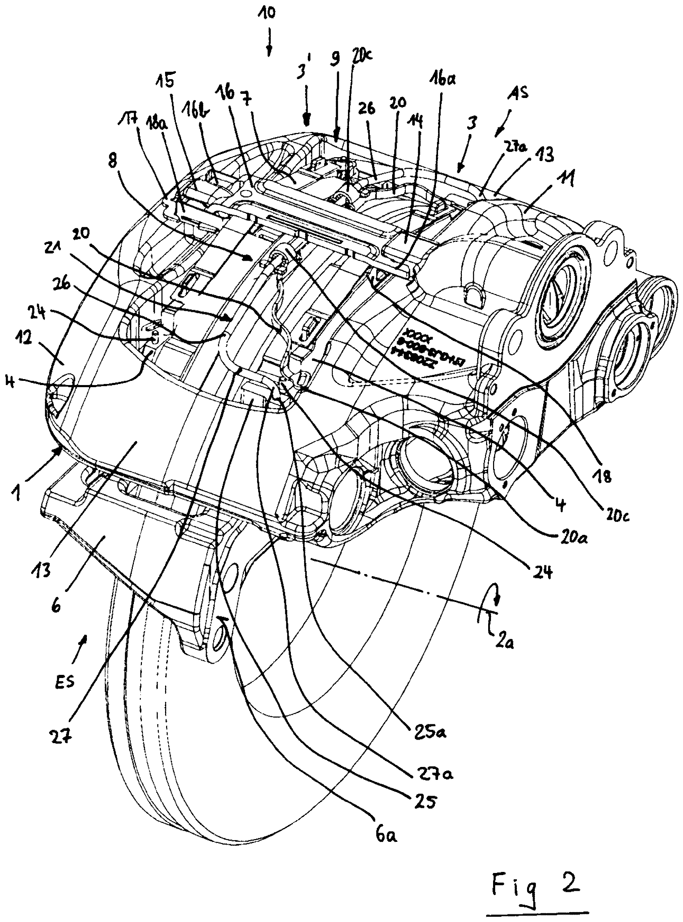

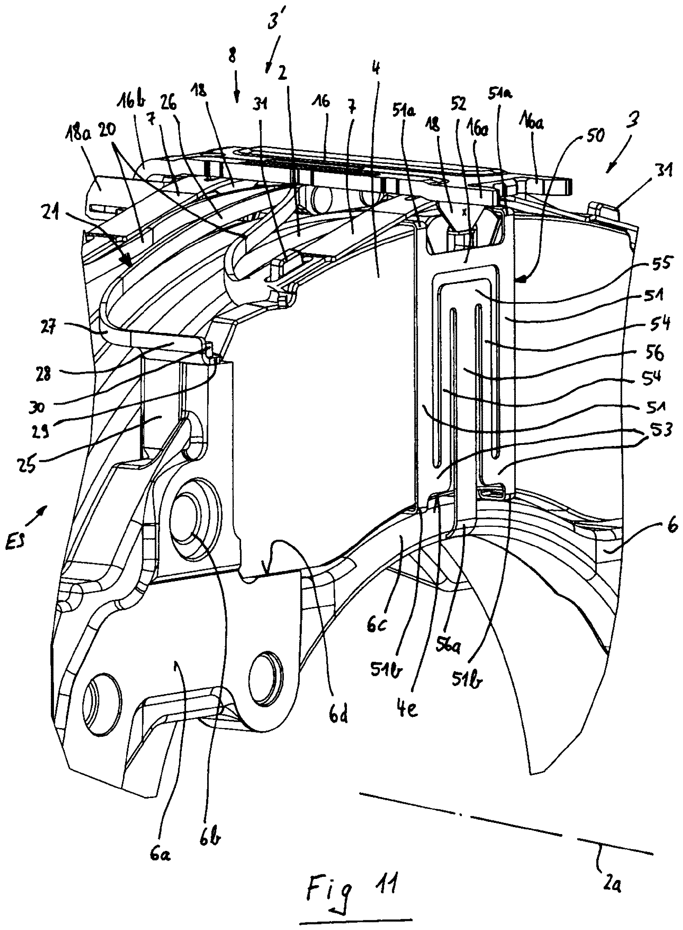

Eine "Oberseite" und eine "Unterseite" eines Bremsbelags 3, 3' bzw. einer Belagträgerplatte 4 beziehen sich immer auf die Einbausituation des jeweiligen Bremsbelags 3, 3'. Dabei liegt die Unterseite des jeweiligen Bremsbelags 3, 3' in radialer Richtung näher an einer Bremsscheibendrehachse 2a als die Oberseite dieses Bremsbelags 3, 3', wie z.B. aus Figur 11 deutlich hervorgeht. **Figuren 1****,** **1a** **und** **2** zeigen perspektivische Ansichten von Ausführungsbeispielen einer erfindungsgemäßen Scheibenbremse 10 mit einer Rückstelleinrichtung aus verschiedenen Blickwinkeln von oben.

Ein Bremssattel 1 übergreift eine Bremsscheibe 2 mit einer Bremsscheibendrehachse 2a. Der Bremssattel 1 ist bezogen auf die Bremsscheibe 2 axial in Richtung der Bremsscheibendrehachse 2a verschiebbar an einem Bremsträger 6 angebracht, wozu der Bremssattel 1 auf nicht dargestellten Führungsholmen gelagert ist, die mit dem ortsfest am Fahrzeug gehaltenen Bremsträger 6 verbunden sind.

In **Figur 1** ist der Bremsträger 6 mit der Bremsscheibe 2, ihrer Bremsscheibendrehachse 2a und Bremsbelägen 3, 3' in einer Ansicht von einer Zuspannseite her gezeigt. Eine Befestigungsseite 6a des Bremsträgers 6 ist mit einem nicht gezeigten ortsfesten Bauteil eines zuzuordnenden Fahrzeugs verbunden. Zudem weist der Bremsträger 6 Lageraufnahmen 6b für die nicht dargestellten Führungsholme für die Lagerung des Bremssattels 1 und einen zuspannseitigen geschwungenen Brückenverbinder 6c auf.

Zudem ist in Figur 1 eine Spreizeinrichtung 8 mit vier Federarmen 20 und einem Haltebogen 21 dargestellt. Die Spreizeinrichtung 8 besteht hier aus zwei identischen Federarmen 20, die im Mittenbereich miteinander verbunden sind, ebenso wie mit einem Haltebogen 21, der über Bügel 21a am Bremsträger 6, und zwar an den Bremsträgerhörnern 25 befestigt ist. Zur axialen Sicherung des Haltebogens 21 sind auf dem Bügel 12, das jeweilige Ende des Haltebogens 21 zwischen sich einklemmend, Sicherungen 13 vorgesehen.

Hierbei liegen die Federarme 20 an zwei sich gegenüberliegenden Endbereichen der Belagträgerplatte 4 an und zwar in einem oberseitig vorstehenden Randbereich. Die Enden der Federarme 20 sind gleichfalls gebogen, so dass ein Gleiten an der Belagträgerplattenfläche beim Zuspannen und Lösen der Bremse problemlos möglich ist. Hierbei wird durch die beim Zuspannen sich ergebende Vorspannung eine Spreizung der Bremsbeläge 3, 3' nach einem Lösen der Bremse möglich.

Die Spreizeinrichtung 8 wird unten noch in einer weiteren Ausführung im Detail erläutert.

Der Bremssattel 1 umfasst einen Zuspannabschnitt 11, einen Sattelrücken 12 und zwei Zugstreben 13. Der Zuspannabschnitt 11 verläuft mit einer Seite parallel zu der Ebene der Bremsscheibe 2 auf einer Seite der Bremsscheibe 2. Auf der anderen Seite der Bremsscheibe 2 ist, ebenfalls parallel zu der Bremsscheibe 2 verlaufend, der Sattelrücken 12 angeordnet. Der Sattelrücken 12 ist mit dem Zuspannabschnitt 11 an jeweils einem Ende mit jeweils einer Zugstrebe 13 verbunden. Die Zugstreben 13 verlaufen dabei im Wesentlichen rechtwinklig zum Zuspannabschnitt 11 und zum Sattelrücken 12.

Der Zuspannabschnitt 11 weist einen Innenraum auf, in welchem eine nicht gezeigte Zuspanneinrichtung der Scheibenbremse 10 angeordnet ist. Eine Öffnung des Innenraums weist zur Bremsscheibe 2 und ist mit einer Platte, die als Bodenblech 19 bezeichnet wird, verschlossen (siehe Figur 1).

Der Zuspannabschnitt 11, der Sattelrücken 12 und die Zugstreben 13 legen in dieser Anordnung eine zentrale Öffnung 9 zwischen sich fest, welche die Bremsscheibe 2 überspannt. Die Öffnung 9 weist eine gedachte Längsmittellinie auf, welche in der Ebene der Bremsscheibe 2 liegt und die gedachten Mitten der Zugstreben 13 verbindet. Außerdem weist die Öffnung 9 eine weitere gedachte Quermittellinie auf, welche eine gedachte Mitte des Zuspannabschnitts 11 eine gedachte Mitte des Sattelrückens 12 verbindet. Die Längsmittellinie und die Quermittellinie schneiden sich in einem gedachten Mittelpunkt, welcher hier als virtuelle Mitte der Öffnung 9 bezeichnet wird.

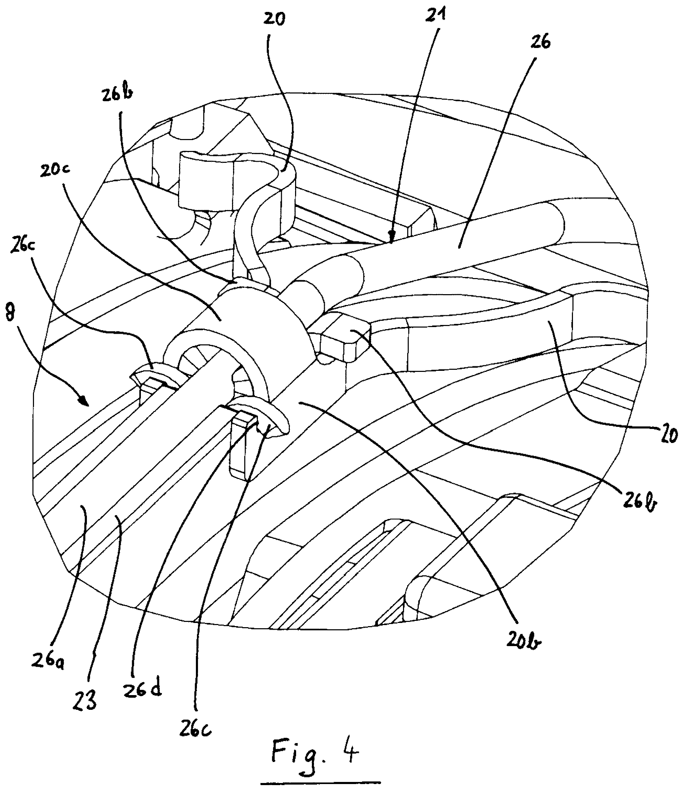

In dem Bremsträger 6 sind Bremsbeläge 3, 3' in den so genannten Belagschächten zwischen den jeweiligen zwei Bremsträgerhörnern 25 angeordnet und liegen mit Abschnitten ihrer Unterseiten auf dem jeweiligen Belagschachtboden 6d auf. Dies ist in Figur 1 deutlich erkennbar. Die Bremsbeläge 3, 3' sind im Fall einer Bremsung beidseitig an die Bremsscheibe 2 anpressbar. Dabei weist jeder Bremsbelag 3, 3' eine Belagträgerplatte 4 und einen auf der der Bremsscheibe 2 zugewandten Seite daran befestigten Reibbelag 5 auf einer Belagseite 4a (siehe Figur 4) auf, der in Funktion, also bei einer Bremsung, gegen die Bremsscheibe 2 gepresst ist. Die andere Seite der Belagträgerplatte 4 wird im Weiteren als Druckseite 4b (siehe auch Figur 4) bezeichnet.

Die Bremsbeläge 3, 3' sind durch die zentrale Öffnung 9 für einen Wechsel und zur Wartung erreichbar. Sie können durch diese zentrale Öffnung 9 in ihre zugehörigen Belagschächte eingesetzt und wieder daraus entnommen werden. Die Belagschächte sind jeweils seitlich durch Bremsträgerhörner 25 festgelegt, wobei die Bremsbeläge 3, 3' jeweils mit Teilabschnitten ihrer Unterseiten auf einem Belagschachtboden 6d (siehe Figur 11) stehen.

Ein Drehpfeil um die Bremsscheibendrehachse 2a deutet eine Hauptdrehrichtung für Vorwärtsfahrt eines Fahrzeugs, dem die Scheibenbremse 10 zugeordnet ist, an. In Bezug auf die Hauptdrehrichtung der Bremsscheibe 2 sind an der Scheibenbremse 10 eine Einlaufseite ES und gegenüberliegend eine Auslaufseite AS festgelegt. Dementsprechend werden die Bremsträgerhörner 25 an der Einlaufseite ES einlaufseitige Bremsträgerhörner 25 und an der Auslaufseite AS auslaufseitige Bremsträgerhörner 25 genannt.

Ein Belaghaltebügel 16 ist über den Bremsbelägen 3, 3' in Querrichtung der Öffnung 9 bzw. in Richtung der Bremsscheibendrehachse 2a zwischen dem Zuspannabschnitt 11 und dem Sattelrücken 12 angeordnet. Ein zuspannseitiges Halteende 16a des Belaghaltebügels 16 ist in einem Halteabschnitt 14 an dem Zuspannabschnitt 11 des Bremssattels 1 befestigt, wobei ein gegenüberliegendes, rückenseitiges Halteende 16b des Belaghaltebügels 16 an einem Halteabschnitt 15 des Sattelrückens 12 festgelegt ist. Das rückenseitige Halteende 16b des Belaghaltebügels 16 ist zudem mittels einer Klammer 18a eines Klammerelementes 18, das an dem rückenseitigen Bremsbelag 3' angebracht ist, befestigt und durch ein nicht näher beschriebenes Sicherungselement 17 gegen Lösen gesichert.

Der Belaghaltebügel 16 drückt hier mit Abschnitten seiner Unterseite auf die Klammerelemente 18 beider Bremsbeläge 3, 3' und somit auch auf deren Belaghaltefedern 7, wodurch die Bremsbeläge 3, 3' in ihren Belagschächten gehalten werden. Die Belaghaltefedern 7 sind jeweils an den Belagträgerplatten 4 an Vorsprüngen 31 gehalten.

Die Bremsung erfolgt mittels der im Zuspannabschnitt 11 des Bremssattels 1 dort in einem Aufnahmeraum angeordneten Zuspanneinrichtung beispielsweise mit einem Bremshebel, der in einem Dom des Bremssattels 1 positioniert ist. Der zugeordnete Bremsbelag 3, als aktionsseitiger oder auch zuspannseitiger Bremsbelag bezeichnet, kontaktiert zunächst bei einer Bremsung die Bremsscheibe 2. Im weiteren Verlauf wird mittels auftretender Reaktionskräfte der Bremssattel 1 entgegengesetzt verschoben, unter Mitnahme des reaktionsseitigen Bremsbelags 3', bis dieser gleichfalls an der Bremsscheibe 2 reibend zur Anlage kommt. Der reaktionsseitige Bremsbelag 3' wird auch rückenseitiger Bremsbelag genannt und im weiteren durch das Bezugszeichen 3' von dem zuspannseitigen Bremsbelag 3 unterschieden.

Nach einem Lösen der Bremse werden die beiden sich gegenüberliegenden Bremsbeläge 3, 3' mittels der Rückstelleinrichtung so weit von der Bremsscheibe 2 gelöst, dass diese gegenüber den Bremsbelägen 3, 3' frei läuft.

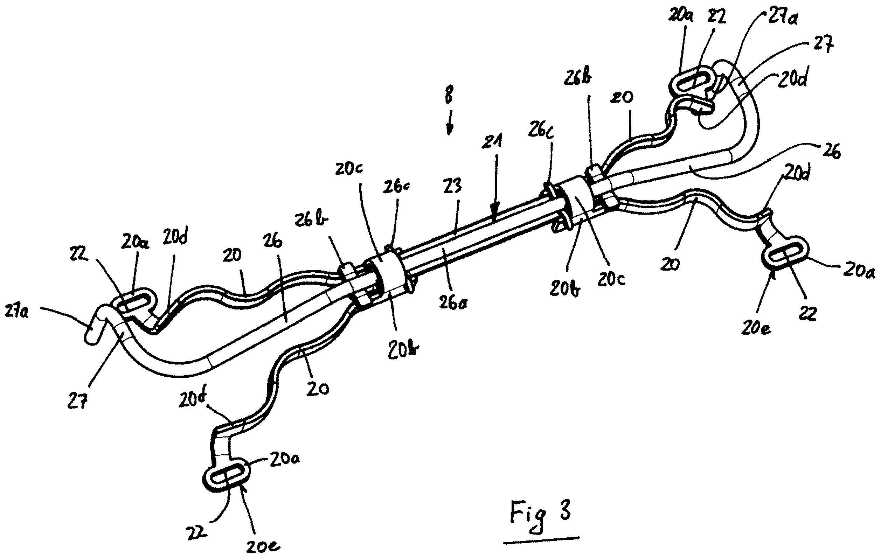

**Figur 3** stellt eine perspektivische Ansicht einer ersten Funktionsgruppe der Rückstelleinrichtung des Ausführungsbeispiels der Scheibenbremse nach Figur 1 dar. **Figuren 4-6** zeigen schematische Detaildarstellungen der ersten Funktionsgruppe nach Figuren 1-3 in verschiedenen Teilansichten.

Die Rückstelleinrichtung besteht hier aus zwei Funktionsgruppen. Die erste Funktionsgruppe umfasst die mindestens eine Spreizeinrichtung 8, wobei die zweite Funktionsgruppe mindestens ein Rückstellelement aufweist. Die beiden Funktionsgruppen sind hier gemeinsam vorhanden und unterstützen sich. Es ist aber auch möglich, dass nur eine der beiden Funktionsgruppen eingesetzt werden kann.

Die erste Funktionsgruppe greift mit der Spreizeinrichtung 8 im oberen Bereich der Belagträgerplatten 4 der sich gegenüberliegenden Bremsbeläge 3, 3' gleich wirkend entgegen der Zuspannrichtung an. Die zweite Funktionsgruppe übt mittels des Rückstellelementes/der Rückstellelemente im mittleren oder/und im unteren Bereich der Belagträgerplatten 4 der sich gegenüberliegenden Bremsbeläge 3, 3' jeweils Druck- oder/und Zugkräfte auf die Bremsbeläge 3, 3' ebenfalls entgegen der Zuspannrichtung aus. Auf diese Weise werden die Bremsbeläge 3, 3' sowohl in ihren oberen Bereichen als auch in ihren mittleren oder/und unteren Bereichen von der Rückstelleinrichtung gleichzeitig mit Rückstellkräften beaufschlagt.

Die Spreizeinrichtung 8 umfasst einen Haltebogen 21 und zwei Spreizelemente, die zwei identische Paare von Federarmen 20 sind. Der Haltebogen 21 ist ortsfest und bildet eine Halterung für die Paare der Federarme 20.

Der Haltebogen 21 ist hier als ein Draht C-förmig ausgebildet und mit z.B. einem kreisrunden Querschnitt gestaltet.

Der Haltebogen 21 umfasst einen Zentralabschnitt 26a in einem mittleren Bereich der Öffnung 9. Der Zentralabschnitt 26a ist bezogen auf die Dicke der

Bremsscheibe 2 mittig dazu angeordnet. An den Zentralabschnitt 26a schließt auf jeder Seite ein Mittelschenkel 26 an, der wie der Zentralabschnitt 26a jeweils in einem Bogen in Umfangsrichtung der Bremsscheibe 2 koaxial zu dieser verläuft. So erstreckt sich der Haltebogen 21 von der Mitte der Öffnung 9 her beidseitig jeweils bis zu einem Bremsträgerhorn 25 des Belagschachtes des zuspannseitigen Bremsbelags 3.

An jedem Ende der Mittelschenkel 26 ist ein Endschenkel 27 angebracht, der um 90° zum Mittelschenkel 26 umgebogen ist und auf das jeweilige Bremsträgerhorn 25 zuläuft. Jeder Endschenkel 27 verläuft dann parallel zu der Bremsscheibenachse 2a und ist dann nach unten hin um ca. 90° in jeweils einen Befestigungsabschnitt 27a umgebogen. Jeder Befestigungsabschnitt 27a ist in einer Bohrung 25a eines jeden Bremsträgerhorns 25 befestigt und bildet damit die Halterung des Haltebogens 21 mit der Spreizeinrichtung 8 in dem Bremsträger 6.

Dabei bildet der Haltebogen 21 insofern eine Zentriereinrichtung für den Bremssattel 1, als der Bremsträger 6, an dem der Haltebogen 21 befestigt ist, ein ortsfestes Teil bildet, dem gegenüber der Bremssattel 1 verschieblich gelagert ist, so dass nach einem Lösen der Bremse und einem Spreizen der Spreizeinrichtung 8, d.h. einem Auseinanderdrücken der Bremsbeläge 3 der Bremssattel 1 in eine zentrierte Stellung geführt wird.

Die beiden Federarme 20 eines jeden Paars von Federarmen 20 sind spiegelbildlich zu dem Zentralabschnitt 26 des Haltebogens 21 ausgebildet.

Die Paare der Federarme 20 sind sich gegenüberliegend in Querrichtung der Öffnung 9 so angeordnet, dass sie mit inneren Enden, die zur Mitte der Öffnung 9 weisen, an dem Haltebogen 21 befestigt sind, wobei ihre äußeren freien Enden mit den Belagträgerplatte 4 der Bremsbeläge 3, 3' zusammenwirken. Dabei ist das eine Paar von Federarmen 20 rechts von dem Mittelpunkt der Öffnung 9 angeordnet, wobei das andere Paar von Federarmen 20 links von dem Mittelpunkt der Öffnung 9 angeordnet ist.

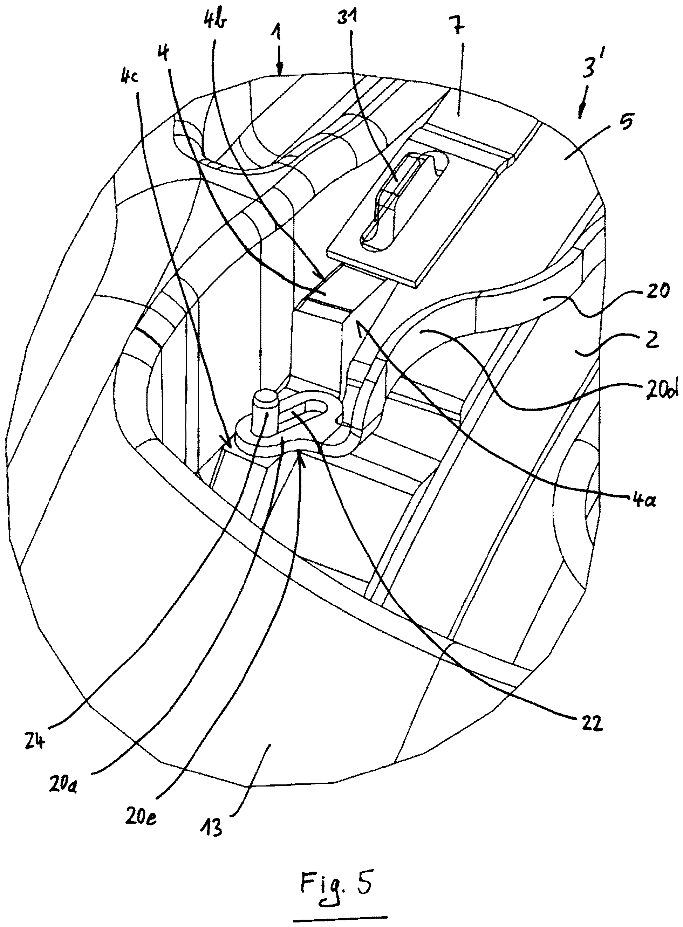

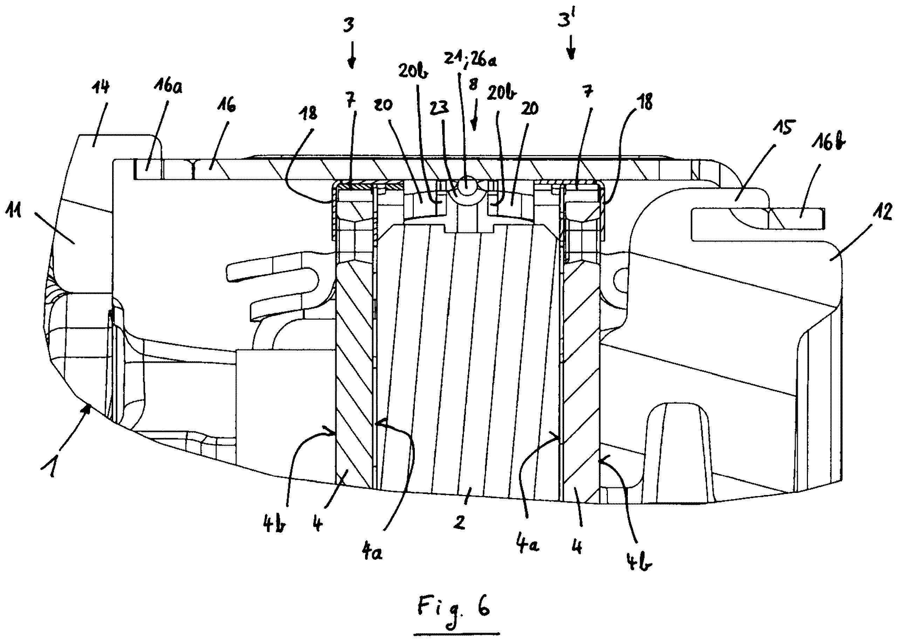

**Figur 4** zeigt eine vergrößerte Darstellung der Anbringung der inneren Enden eines Paars von Federarmen 20 an dem Haltebogen 21. In **Figur 5** ist eine vergrößerte Darstellung eines Druckabschnitts22a eines freien Außenendes eines Federarms 20 in Zusammenwirkung mit einer zugehörigen Belagträgerplatte 4 gezeigt. **Figur 6** stellt einen schematischen Teilschnitt der Scheibenbremse 10 in einer vertikalen Ebene der Bremsscheibendrehachse 2a dar.

Die Beschreibung eines Federarms 20 von beiden Federarmen 20 des Paars von Federarmen 20 gilt für den anderen Federarm 20 des Paars in spiegelbildlicher Weise, wie aus den Figuren 3 und 4 deutlich hervorgeht.

Jeder Federarm 20 weist einen mehrfach gebogenen Körper mit einem inneren und einem äußeren Ende auf. Die inneren Enden beider Federarme 20 eines Paars von Federarmen 20 sind als parallel zueinander verlaufende Verbindungsabschnitte 20b ausgebildet, die durch einen gemeinsamen Haubenverbinder 20c verbunden sind, mit dem eine Befestigung des Paars von Federarmen 20 am Haltebogen 21 gebildet ist Dabei verläuft der Zwischenabschnitt 26a des Haltebogens 21 im eingebauten Zustand der Spreizeinrichtung 8 zwischen den beiden parallel verlaufenden Verbindungsabschnitten 20b. Das äußere freie Ende jedes Federarms 20 weist einen Endabschnitt 20d mit einem daran angebrachten Druckabschnitt 20a mit einem Langloch 22 zur Zusammenwirkung mit der Belagträgerplatte 4 auf, wie unten noch näher erläutert wird.

Die Haubenverbinder 20c sind beidseitig jeweils mit dem Verbindungsabschnitt 20b, der jeweils eine Verlängerung eines jeden Federarms 20 bildet, verbunden und in einer Art Hülsenform um den Zentralabschnitt 26a des Haltebogens 21 umgebogen. Auf diese Weise ist jeder Haubenverbinder 20c zusammen mit den beiden Federarmen 20 dieses Paars von Federarmen 20 auf dem Zentralabschnitt 26a des Haltebogens 21 drehbar gelagert.

Jeder Haubenverbinder 20c weist eine nach unten zur Bremsscheibe 2 hin weisende Aufnahmeöffnung in Längsrichtung des Zentralabschnitts 26a des Haltebogens 21 auf, die mit der Außenkontur des Zentralabschnitts 26a des Haltebogens 21 kommuniziert. Die paarweise mit jeweils einem Haubenverbinder 20c verbundenen Federarme 20 sind mit ihrem jeweiligen Haubenverbinder 20c auf den Zentralabschnitt 26a des Haltebogens 21 derart von oben aufgebracht, dass der Zentralabschnitt 26a in den Aufnahmeöffnungen der Haubenverbinder 20c aufgenommen ist.

Die Spreizeinrichtung 8 weist außerdem eine Schelle mit einem Mittelsteg auf, der hier als Längsverbinder 23 bezeichnet ist. Die Schelle umfasst außerdem vier Umlegelaschen als Sicherungselemente 26c und vier Niederhalter als Verbreiterungen 26b, welche die Federarme 20 auf die Belagträgerplatten 4 drücken sollen.

Die Verbreiterungen 26b liegen jeweils beiderseits an dem Übergang des Zentralabschnitts 26a zum Mittelschenkel 26 des Haltebogens 21 auf den Verbindungsabschnitten 20b der Federarme 20 auf. Auf diese Weise verhindern die Verbreiterungen 26b ein Abheben der Haubenverbinder 20c von dem Zentralabschnitt 26a. Gleichzeitig bilden die Verbreiterungen 26b einen axialen Anschlag für die Haubenverbinder 20c des jeweiligen Paars von Federarmen 20 in Richtung der Längsachse des Zentralabschnitts 26a jeweils von der Mitte der Öffnung 9 nach außen auf die benachbarte Zugstrebe 13 hin (siehe Figuren 1,2 und 4).

Die jeweiligen zwei Verbindungsabschnitte 20b der Federarme 20 weisen mit ihren freien Enden zur Mitte der Öffnung 9 und sind jeweils mit dem Sicherungselement 26c in ihren Endbereichen verbunden. Das Sicherungselement 26c besteht jeweils aus zwei Umlegelaschen, die jeweils mit einem Ende in einer Nut 26d in jeweils einem Endbereich der Verbindungsabschnitte 20b festgelegt sind. Die Sicherungselement e 26c bilden auf diese Weise eine weitere Sicherung eines jeweiligen Haubenverbinders 20c gegen Lösen von dem Zentralabschnitt 26a.

Das Verspannen der Spreizelemente wird durch die Umlegelaschen als Sicherungselemente 26c der Schelle sichergestellt, die bei der Montage umgelegt werden und in die Nut 26d greifen. So sichert man das Spreizelement, damit es nicht in Richtung Mitte rutscht und auf die Belagträgerplatte 4 kippt.

Dadurch, dass der Mittelsteg (Längsverbinder 23) der Schelle außerdem durchgehend ist, kann die Schelle auch nicht mehr axial auf dem Haltebogen 21 rutschen. Daher kann auf Schweißnähte oder weitere Fixierungen verzichtet werden. Zusätzlich dient die Schelle auch als Abstandhalter.

Damit wird die Spreizeinrichtung besonders flexibel und anpassungsfähig.

Der Körper eines jeden Federarms 20 ist mehrfach gebogen. Dabei verläuft der Körper ausgehend von dem Ende des Verbindungsabschnitts 20b, welches zur zugehörigen Zugstrebe 13 des Bremssattels 1 weist, zunächst sich abwendend von dem Haltebogen 21 in einem S-förmigen Bogen dergestalt, dass sich das zugstrebenseitige Ende des S-förmigen Bogens in einem Abstand zu dem Haltebogen 21 befindet, der beispielsweise eine Größe eines 2,5-fachen Abstands des Verbindungsabschnitts 20b zum Haltebogen aufweist. Dieses Ende des S-förmigen Bogens geht in einen weiteren S-förmigen Bogen über. Das freie Ende des weiteren S-förmigen Bogens ist der Endabschnitt 20d und von dem Haltebogen 21 nunmehr um beispielsweise den 2,5-fachen Abstands des Endes des ersten S-förmigen Bogens zum Haltebogen 21 beabstandet.

An dem Endabschnitt 20d ist der Druckabschnitt 20a über einen in einem Bogen nach unten verlaufenden Verbindungsabschnitt angebracht. Dabei liegt der Druckabschnitt 20a in einer Tangentialebene zur Bremsscheibe 2.

Die Druckabschnitte 20a sind in ihrer jeweiligen Längsrichtung mit dem Langloch 22 ausgebildet, welches als ein Führungsabschnitt für die Federarme 20 der Spreizeinrichtung 8 dient. Die Mittellängsachsen der Langlöcher 22 verlaufen jedoch in Bezug auf eine Längsachse der zugehörigen Belagträgerplatte 4 in einem Winkel, der in einem Bereich von z.B. größer als 0° und kleiner als 45° liegt. Dabei schneiden sich die Mittellängsachsen der Langlöcher 22 der Druckabschnitte 20a einer gemeinsamen Belagträgerplatte 4 in einem gedachten Schnittpunkt, welcher auf der Seite der Belagträgerplatte 4 liegt, auf der der Reibbelag 5 angeordnet ist.

Die Druckabschnitte 20a stehen mit ihren Langlöchern 22 im zusammengebauten Zustand der Scheibenbremse 10 jeweils mit einem Stift 24 in Zusammenwirkung, wie in Figur 5 deutlich zu erkennen ist. An jedem Ende einer Belagträgerplatte 4 ist ein Stift 24 fest mit der Belagträgerplatte 4 verbunden, z.B. in eine Bohrung eingesetzt. Dabei erstreckt sich ein von der Belagträgerplatte 4 hervorstehendes Ende des Stiftes 24 durch das zugehörige Langloch 22 des jeweiligen Druckabschnitts 20a eines Federarms 20 der Spreizeinrichtung 8. Mittelachsen der Stifte 24 verlaufen zueinander parallel und senkrecht zu der Bremsscheibendrehachse 2a. Die Langlöcher 22 ermöglichen Relativbewegungen zwischen den Federarmen 20 der Spreizeinrichtung 8 und den Bremsbelägen 3, die sich in Richtung der Bremsscheibendrehachse 2a verschieben. Die Federkräfte der Federarme 20 ermöglicht es, die Bremsbeläge 3 nach einer Bremsung von der Bremsscheibe 2 zu lösen und zurückzustellen, wie bereits oben beschrieben.

Die Befestigungsabschnitte 20a liegen dabei jeweils mit Auflageflächen 29e auf einer Auflagefläche 4c der jeweiligen Belagträgerplatte 4 auf. Die Auflageflächen 4c der Belagträgerplatte 4 verlaufen tangential zu der Bremsscheibe 2 und liegen je Bremsbelag 3 in einer Ebene.

Die Federarme 20, ihre Druckabschnitte 20a und ihre Verbindungsabschnitte 20b mit den Haubenverbindern 20c sind z.B. einstückig als Stanzbiegeteile aus Bandfederstahl ausgebildet. Die Spreizelemente, d.h. die Federarme 20, können so beispielsweise aus kostengünstigen und geometrisch flexiblen Blechen gebildet werden.

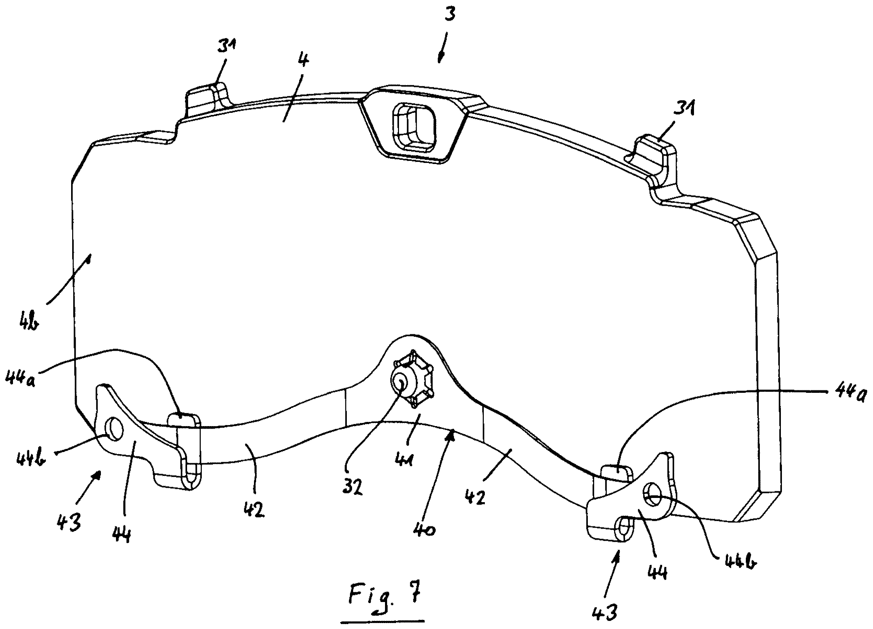

In den Figuren 7 bis 8 sind perspektivische Ansichten einer zweiten Funktionsgruppe der Rückstelleinrichtung des Ausführungsbeispiels der Scheibenbremse nach Figur 1 dargestellt.

**Figur 7** zeigt eine perspektivische Ansicht einer Druckseite 4b der Belagträgerplatte 4 des zuspannseitigen bzw. inneren Bremsbelags 3 mit einem Rückstellelement 40.

Die Druckseite 4b der Belagträgerplatte 4 ist die Seite der Belagträgerplatte 4, welche keinen Reibbelag 5 trägt und entweder mit der Zuspanneinrichtung oder mit dem Sattelrücken 12 in Kontakt steht.

Das Rückstellelement 40 bewirkt eine Unterstützung der Rückstellung des zuspannseitigen Bremsbelags 3 von der Bremsscheibe 2 nach einem Bremsvorgang. Dabei greift das Rückstellelement 40 mit einem Abschnitt in einem unteren Bereich an der Belagträgerplatte 4 zusätzlich zu dem Angriffspunkt/den Angriffspunkten an der Oberseite der Federarme 20 an, wobei das Rückstellelement 40 mit einem anderen Abschnitt an einem zu dem Rückstellelement 40 relativ ortsfesten Abschnitt, z.B. Bremssattel 1 oder/und Bremsträger 6 verbunden ist.

Dazu ist das Rückstellelement 40 in der Ausführung nach Figur 7 mit einem Abschnitt in einem unteren Bereich der Belagträgerplatte 4 auf deren Druckseite 4b an einem Haltezapfen 32 befestigt. Der Haltezapfen 32 kann natürlich auch in anderer Gestalt ausgebildet sein, z.B. eine Schraube, Bolzen u.dgl. Zudem ist das Rückstellelement 40 mit einem weiteren Abschnitt in einem unteren Bereich der Bodenplatte 19 (siehe auch Figur 1) des Zuspannabschnitts 11 des Bremssattels 1 angebracht.

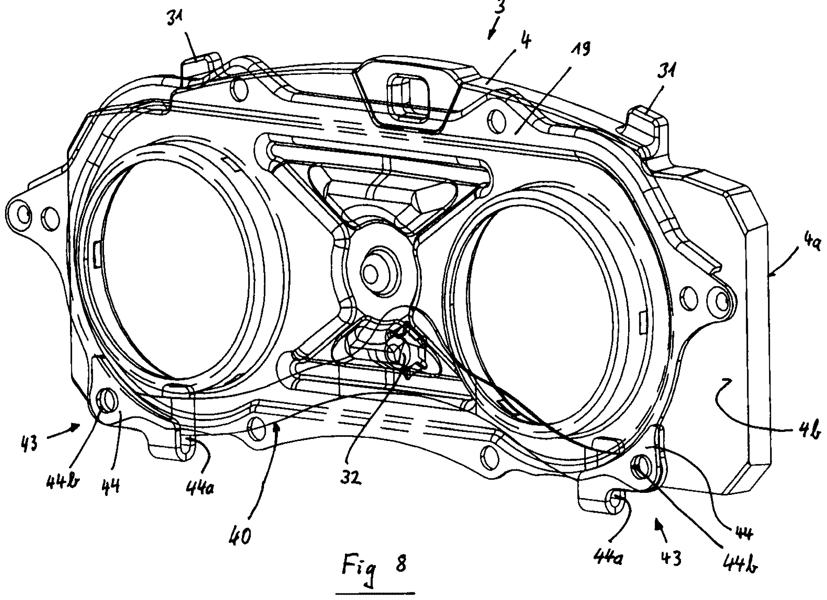

Hierzu ist in **Figur 8** eine schematische perspektivische Darstellung von Bodenplatte 19 und transparenter Belagträgerplatte 4 mit Eingriff des Rückstellelementes 40 gezeigt.

Das Rückstellelement 40 ist hier ein Federelement mit einem Zentralabschnitt 41, zwei Federarmen 42, zwei Befestigungsabschnitten 43 mit jeweils einer U-förmigen Lasche 44 mit einem Schenkel 44a. Der Zentralabschnitt 41 und die Federarme 42 sind beispielsweise aus einem flachen Bandfederstahl hergestellt, wobei die Befestigungsabschnitte 43 übliches Stahlblech sein können.

Der Zentralabschnitt 41 ist mittig mit dem Haltezapfen 32 über eine Klemm-/Krallverbindung verbunden. An jeder Seite geht der Zentralabschnitt 41 symmetrisch in den jeweiligen Federarm 42 über. Jeder Federarm 42 erstreckt sich von dem Zentralabschnitt 41 nach links und rechts in einem unteren Bereich der Belagträgerplatte 4 entlang und ist entsprechend ihrer Kontur geformt. Die Enden jedes Federarms 42 sind jeweils mit dem Befestigungsabschnitt 43 verbunden. Jeder Befestigungsabschnitt 43 ist so geformt, dass die Bögen der U-Formen der Lasche 44 und die Schenkel 44a untereinander fluchten und in tangentialer Richtung zur Bremsscheibendrehachse 2a liegen. Der jeweils zur Bodenplatte 19 weisende Schenkel der Befestigungsabschnitte 43 verläuft nach außen hin als Lasche 44 und erweitert sich so, dass er jeweils eine Befestigungsbohrung 44b zur Fixierung durch Schrauben der Bodenplatte 19 an derselben aufweist. Die Schrauben können auch vorhandene Befestigungsschrauben der Bodenplatte 19 sein.

Nach einem Bremsvorgang werden die Bremsbeläge 3, 3' einerseits durch die Federarme 20 der Spreizeinrichtung 8 wieder auseinandergedrückt und so von der Bremsscheibe 2 zurückgestellt. Gleichzeitig wird das Rückstellelement 40, welches auch schon vorgespannt eingebaut sein kann, beim Bremsvorgang aufgrund seiner ortsfesten Fixierung seiner Befestigungsabschnitte 43 an der Bodenplatte 19 gespannt und kann nach dem Bremsvorgang zusätzlich den Bremsbelag 3 durch Aufbringen einer auf diese Weise gespeicherten Zugkraft von der Bremsscheibe 2 zurückziehen.

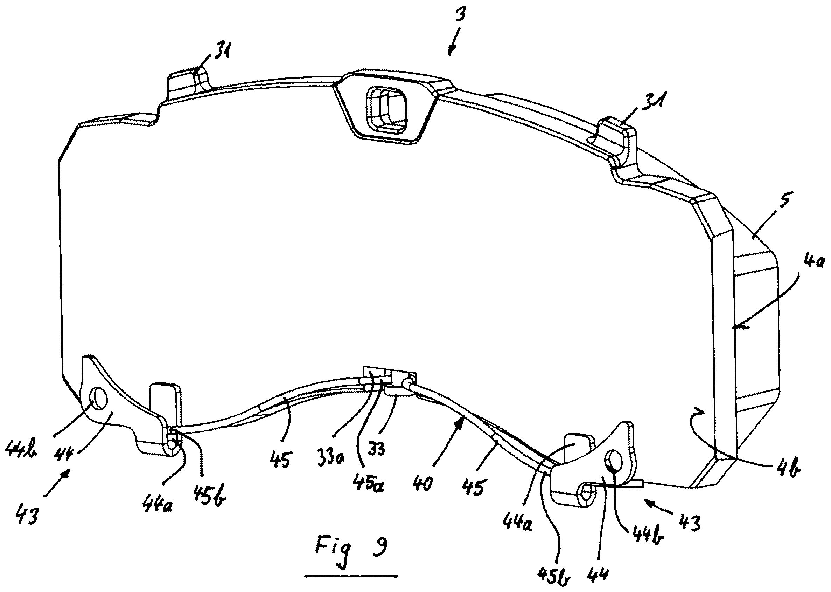

Die Figuren 9-17 zeigen perspektivische Ansichten von Varianten der zweiten Funktionsgruppe der Rückstelleinrichtung.

**Figur 9** zeigt eine erste Variante der zweiten Funktionsgruppe der Rückstelleinrichtung nach Figur 8. Die Befestigungsabschnitte 43 sind identisch mit denen der Ausführung nach Figur 8. Im Unterschied dazu ist das Rückstellelement 40 dieser ersten Variante aus einem Federdraht ausgebildet. Der Federdraht weist zwei Federarme 45 auf, die durch einen Zentralabschnitt 45a verbunden sind. Die freien Enden der Federarme sind als Endabschnitte 45b mit dem jeweiligen Befestigungsabschnitt 43 fest verbunden, z.B. verschweißt. Der Zentralabschnitt 45a ist hier ein Bestandteil des Federdrahtes und an einem Halter 33 an der Unterseite der Belagträgerplatte 4 befestigt.

Der Halter 33 ist hier als ein Bolzen mit einer Kopfplatte ausgeführt, deren Durchmesser größer als der Bolzenkörper ist. Der Halter 33 ist in einer Ausnehmung 33a der Belagträgerplatte 4 in deren Unterseite angeordnet. Dabei ist der Zentralabschnitt 45a um den Bereich des Bolzens zwischen Boden der Ausnehmung 33a und der Kopfplatte des Bolzens innerhalb der Ausnehmung 33a herumgeschlungen.

Die Funktion des Rückstellelementes 40 ist wie im Zusammenhang mit der Ausführung nach Figur 7-8 beschrieben.

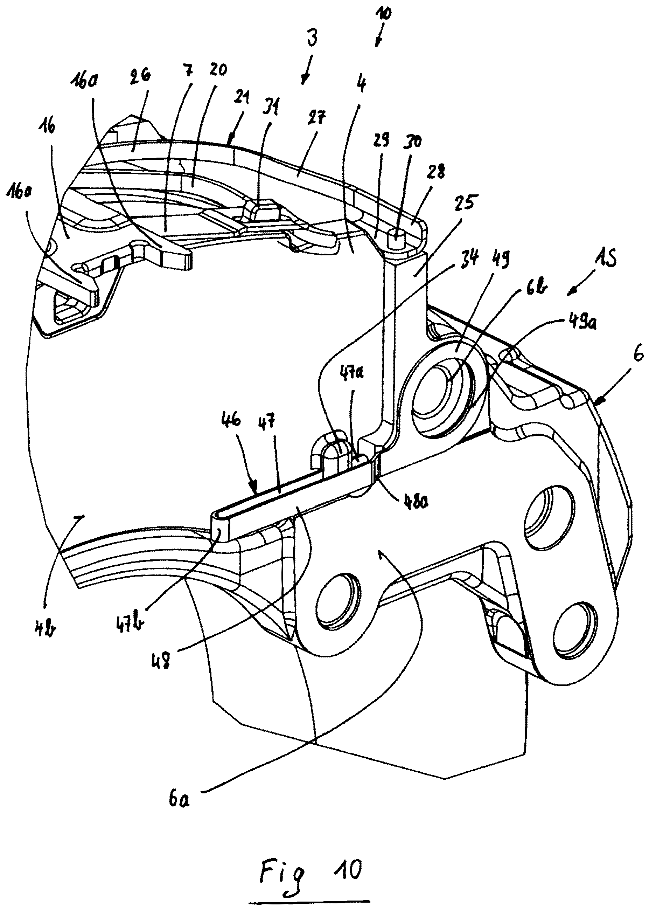

**Figur 10** stellt eine zweite Variante der zweiten Funktionsgruppe dar und zeigt außerdem die rechte Hälfte des eingebauten zuspannseitigen Bremsbelags 3 in seinem zugehörigen Belagschacht mit dem Bremsträger 6. Der Bremsbelag 3 ist durch den Belaghaltebügel 16, dessen zuspannseitiges Halteende 16a zu sehen ist, über die Belaghaltefeder 7, die an den Vorsprüngen 31 gehalten ist, in den Belagschacht gedrückt. Der Bremsträger 6 ist hier mit seiner Befestigungsseite 6a dargestellt, in welcher mehrere, nicht bezeichnete Befestigungslöcher zur Befestigung an einem ortsfesten Teil eines zuzuordnenden Fahrzeugs eingeformt sind. Zudem ist das rechte, in diesem Fall (siehe Figur 1) das auslaufseitige Bremsträgerhorn 25 mit einer darunter angeordneten Lageraufnahme 6b gezeigt. Die Lageraufnahme 6b nimmt einen Lagerholm der Längslager des Bremssattels 1 auf.

In der zweiten Variante umfasst die zweite Funktionsgruppe zwei Rückstellelemente 46, von denen in Figur 10 nur das rechte an der rechten Unterseite der Belagträgerplatte 4 gezeigt ist. Das zweite Rückstellelement 46 dieser zweiten Variante ist an der hier nicht gezeigten, aber leicht vorstellbaren linken Unterseite der Belagträgerplatte 4 spiegelbildlich zu dem rechten Rückstellelement 46 angeordnet und entsprechend aufgebaut.

Das Rückstellelement 46 umfasst einen ersten Federarm 47 mit einem Einspannende 47a und einer Verbindung, einen zweiten Federarm 48 mit einer Verbindung 48a und einen Befestigungsabschnitt 49 mit einer Öffnung 49a.

Der erste Federarm 47 ist mit seinem Einspannende 47a in einem Halter 34 eingesteckt und an diesem befestigt, z.B. durch Klemm-/Kerbwirkung o.dgl. Der Halter 34 steht hier an der rechten unteren Ecke der Druckseite 4b der Belagträgerplatte 4 hervor und kann z.B. bei Herstellung der Belagträgerplatte 4 angegossen sein.

Der erste Federarm 47 erstreckt sich im unteren Bereich vor der Druckseite 4b der Belagträgerplatte 4 von dem Halter 34 aus nach links in Richtung Mitte der Belagträgerplatte 4 in einer Länge, die etwa einem Drittel der Länge der Belagträgerplatte 4 entspricht. Dann geht der erste Federarm 47 in die Verbindung 47b über, welche um etwa 180° nach außen, d.h. zum Zuspannabschnitt 11 hin gebogen ist.

Die Verbindung 47a ihrerseits geht nun in den zweiten Federarm 48 über, der sich entgegengesetzt zu dem ersten Federarm 47 parallel zu diesem bis über den Halter 34 erstreckt. Die Verbindung 48a ist als eine Art Kröpfung in Richtung auf die Belagträgerplatte 4 ausgebildet und mit dem Befestigungsabschnitt 49 verbunden.

Der Befestigungsabschnitt 49 liegt mit seiner großen Öffnung 49a vor der Öffnung der Lageraufnahme 6b des Bremsträgers 6 koaxial zu dieser. Nach Befestigung des Bremsträgers 6 ist somit auch der Befestigungsabschnitt 49 zwischen der Befestigungsseite 6a und dem ortsfesten Teil des zuzuordnenden Fahrzeugs ortsfest fixiert.

Figur 10 zeigt außerdem eine Variante des Haltebogens 21, bei welcher die Endschenkel 27 auf den einander zugewandten Seiten jeweils an einem Endabschnitt 28 mit einer Lasche 29 versehen sind, an denen Zapfen 30 gehalten sind, die in nicht bezeichnete Bohrungen der Bremsträgerhörner 25 eingreifen. Die Lasche 29 liegt auf einer planen Stirnseite des Bremsträgerhorns 25 auf. Der Zapfen 30 kann als Niet ausgebildet und in die Bohrung des Bremsträgerhorns 25 eingesteckt sein. Es ist auch möglich, dass der Zapfen 30 an dem Bremsträgerhorn 25 angeformt oder als ein separates Bauteil schon vorher fest eingesetzt ist.

Die beiden Rückstellelemente 46 können beispielsweise als Stanzbiegeteile aus einem flachen Federstahlmaterial hergestellt sein.

Die Funktion der beiden Rückstellelemente 46 ist oben bereits beschrieben, wobei der ortsfeste Abschnitt zur Fixierung der Rückstellelemente 46 in diesem Fall der Bremsträger 6 ist und die Zugkräfte an zwei Eckpunkten der Belagträgerplatte 4 durch die Halter 34 eingeleitet werden.

**Figur 11** stellt eine dritte Variante der zweiten Funktionsgruppe mit einem zentralen Rückstellelement 50 dar.

Das Rückstellelement 50 ist mittig in vertikaler Richtung an der Druckseite 4b der zuspannseitigen Belagträgerplatte 4 angeordnet und sowohl an der Oberseite und der Unterseite der Belagträgerplatte 4 befestigt, wobei eine ortsfeste Fixierung eines Endes des zentralen Rückstellelementes 50 mittig an einem zuspannseitigen Brückenverbinder 6c des Bremsträgers 6 gebildet ist.

Das zentrale Rückstellelement 50 weist zwei seitliche, parallel zueinander angeordnete Längsglieder 51 auf, deren obere Enden als Klemmabschnitte 51 a als Klammern die Oberseite der Belagträgerplatte 4 links und rechts neben dem Klammerelement 18 fest umgreifen. In gleicher Weise sind die beiden Längsglieder 51 an ihren unteren Enden mit derartigen Klemmabschnitten 51 b versehen, die als Klammer die Unterseite der Belagträgerplatte 4 fest umgreifen.

Die beiden Längsglieder 51 sind unterhalb der oberen Klemmabschnitte 51a durch einen Querverbinder 52 verbunden. An ihrer Unterseite sind die Längsglieder 51 oberhalb der unteren Klemmabschnitte 51b mit jeweils einem Querverbinder 53 verbunden, an welchen jeweils ein weiteres Längsglied 54 angebracht ist. Die weiteren Längsglieder 54 erstrecken sich jeweils parallel zu den äußeren Längsgliedern 51 nach oben und sind an ihren oberen Enden unterhalb des Querverbinders 53 mit einem weiteren Querverbinder 55 verbunden.

In der Mitte des weiteren Querverbinders 55 ist ein zentrales Längsglied 56 angebracht, welches sich zwischen den beiden Längsgliedern 54 nach unten über die Klemmabschnitte 51b hinaus erstreckt und in einem eigenen Klemmabschnitt 56a endet. Dieser zentrale Klemmabschnitt 56a ist mittig an dem ortsfesten Brückenverbinder 6c des Bremsträgers 6 in geeigneter Weise, z.B. geklemmt, fixiert.

Die Funktion ist wie oben beschrieben.

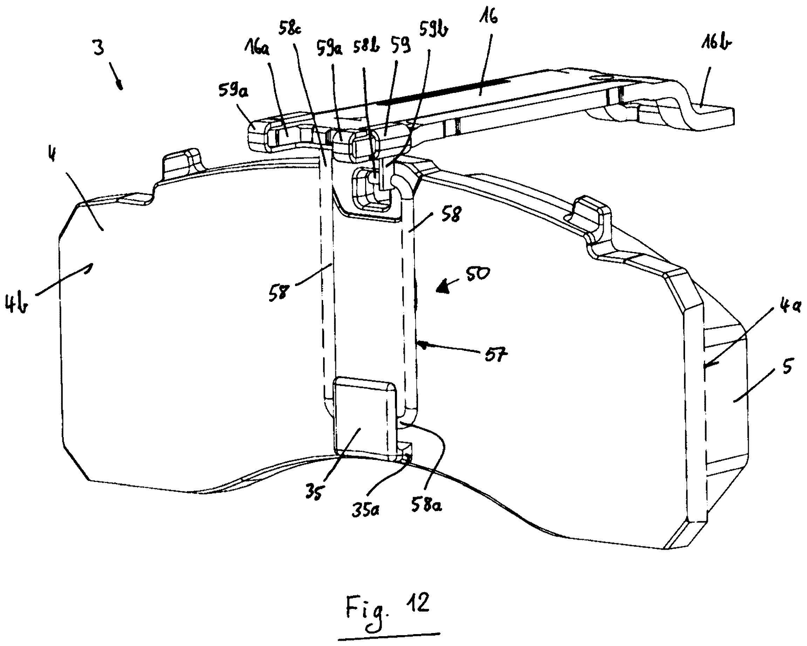

In den Figuren 12 bis 15 sind Varianten von zentralen Rückstellelementen 50 an der Druckseite 4b der zuspannseitigen Belagträgerplatte 4 des zuspannseitigen Bremsbelags 3 zusammen mit dem Belaghaltebügel 16 gezeigt.

Die Fixierung der Rückstellelemente 50 an den Belagträgerplatte 4 ist jeweils in deren unterem Bereich angeordnet, wobei die ortsfeste Fixierung der Rückstellelemente 50 jeweils an dem zuspannseitigen Halteende 16a des Belaghaltebügels 16 vorgesehen ist. Die Funktion der Rückstellelemente 50 ist bereits oben erläutert.

Das Rückstellelement 50 nach **Figur 12** weist einen drahtförmigen Federkörper 57 mit zwei parallel zueinander angeordneten Längsglieder 58 auf. Die Längsglieder 58 sind hier unten durch einen Querverbinder 58a verbunden, der mittig unter einem Haltewinkel 35 im unteren Bereich der Belagträgerplatte 4 gehalten ist. Die Längsglieder 58 und der Querverbinder 58a können einstückig aus Federdraht als Biegeteil hergestellt sein.

Ein oberes Ende des einen Längsgliedes 58, hier das rechte, ist zur Mitte hin als ein Endabschnitt 58b um ca. 90° umgebogen und in einem Halterabschnitt 59b einer Halterung 59 an dem zuspannseitigen Halteende 16a des Belaghaltebügels 16 angebracht. Das obere Ende des anderen (linken) Längsgliedes 58 ist in ähnlicher Weise zur Mitte hin als Endabschnitt 58c um ca. 90° umgebogen und an der Halterung 59 befestigt. Dies ist hier nicht gezeigt, aber leicht verständlich. Dabei sind die umgebogenen Endabschnitte 58b, 58c in vertikaler Richtung zueinander versetzt angeordnet.

Die Halterung 59 ist hier als Stanzbiegeteil mit klammerförmigen Halterabschnitten 59a ausgebildet, welche Abschnitte des Halteendes 16a des Belaghaltebügels 16 umgreifen.

Der Haltewinkel 35 ist an seiner unteren Seite über einen Schenkel 35a an der Druckseite 4b der Belagträgerplatte 4 befestigt und erstreckt sich hier etwa über ein Viertel der vertikalen Länge der Belagträgerplatte 4 nach oben. Der Querverbinder 58a ist dabei etwa mittig zwischen der Druckseite 4b der Belagträgerplatte 4 und der Unterseite des Haltewinkels 35 gehalten.

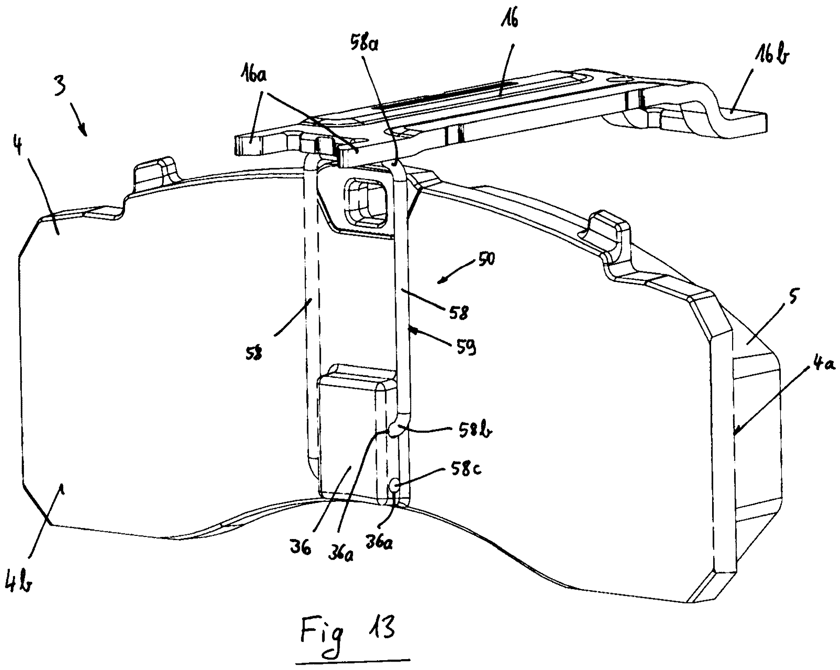

In **Figur 13** ist das Rückstellelement 50 wie in Figur 12 ausgebildet, jedoch um 180° gedreht angeordnet. Der Querverbinder 58a ist unterhalb des zuspannseitigen Halteendes 16a des Belaghaltebügels 16 angebracht. Die Endabschnitte 58b und 58c sind ein einem blockartigen Halter 36 in geeigneten Halteöffnungen 36a aufgenommen und verdrehbar fixiert. Der Halter 36 kann bei der Herstellung der Belagträgerplatte 4 angegossen sein.

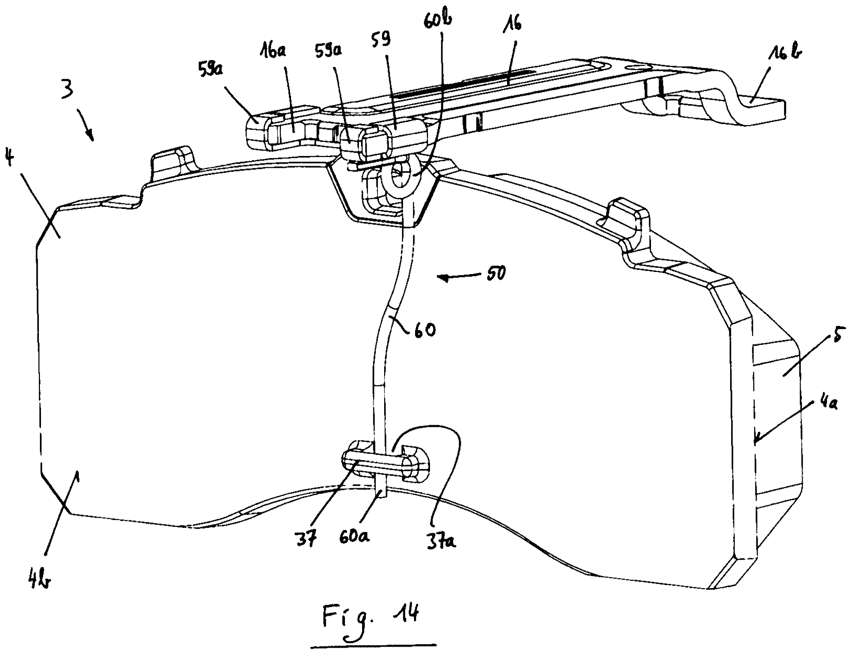

**Figur 14** zeigt ein weiteres Rückstellelement 50 mit einem einzelnen Federkörper 60, der mit einem unteren Endabschnitt 60a in einem Haltebügel 37 in einer Halteöffnung 37a eingesteckt ist. Das obere Ende des Federkörpers 60 ist in einer Federwindung als Befestigungsabschnitt 60b ausgeführt und an einer ähnlichen Halterung 59 wie im Zusammenhang mit Figur 12 beschrieben angebracht, wobei die Anbringung unterschiedlich sein kann, beispielsweise ist der Befestigungsabschnitt 60b eingesteckt oder mit der Halterung 59 verschweißt. Der Federkörper 60 ist hier mit zwei Bögen mit relativ großen Radien versehen. Der Haltebügel 37 kann an die Druckseite 4b der Belagträgerplatte 4 angegossen sein.

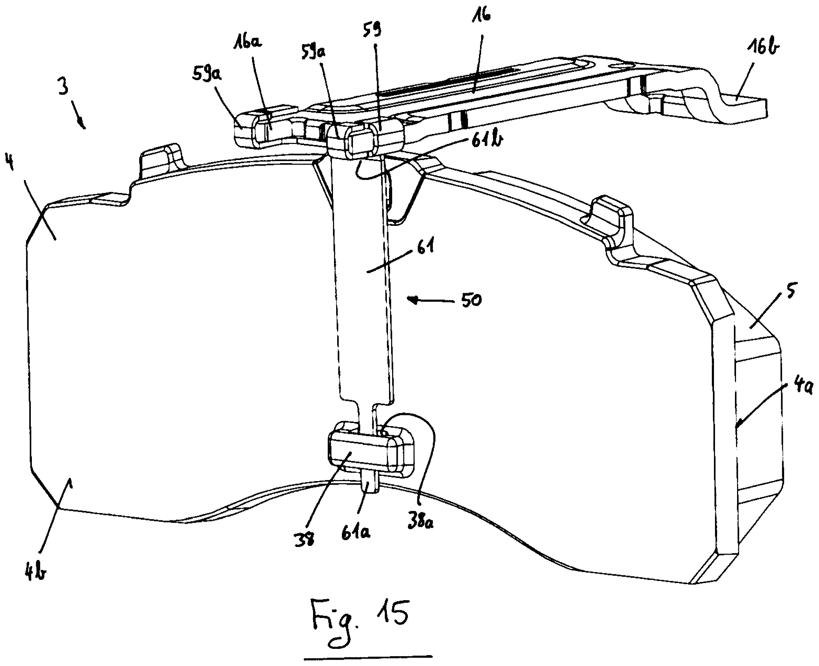

Eine weitere Variante zeigt **Figur 15****,** wobei das Rückstellelement 50 als eine Federplatte 61 ausgeführt ist. Eine Breite der Federplatte 61 entspricht hier beispielsweise einer doppelten Dicke der Belagträgerplatte 4 in Richtung der Bremsscheibendrehachse 2a. Die Federplatte 61 steht mit einem Endabschnitt 61a in Eingriff mit einem Haltebügel 38 in dessen Halteöffnung, wie schon oben beschrieben. Ein Befestigungsabschnitt 61b der Federplatte 61 ist an der schon oben beschriebenen Halterung 59 am zuspannseitigen Halteende 16a des Belaghaltebügels 16 in geeigneter Weise angebracht, z.B. eingesteckt, eingehängt, angeschweißt o.dgl.

Die vorstehenden Beispiele der zweiten Funktionsgruppe der Spreizeinrichtung 8 betrafen jeweils den zuspannseitigen Bremsbelag 3. Sie können natürlich auch am rückenseitigen Bremsbelag 3' vorgesehen sein.

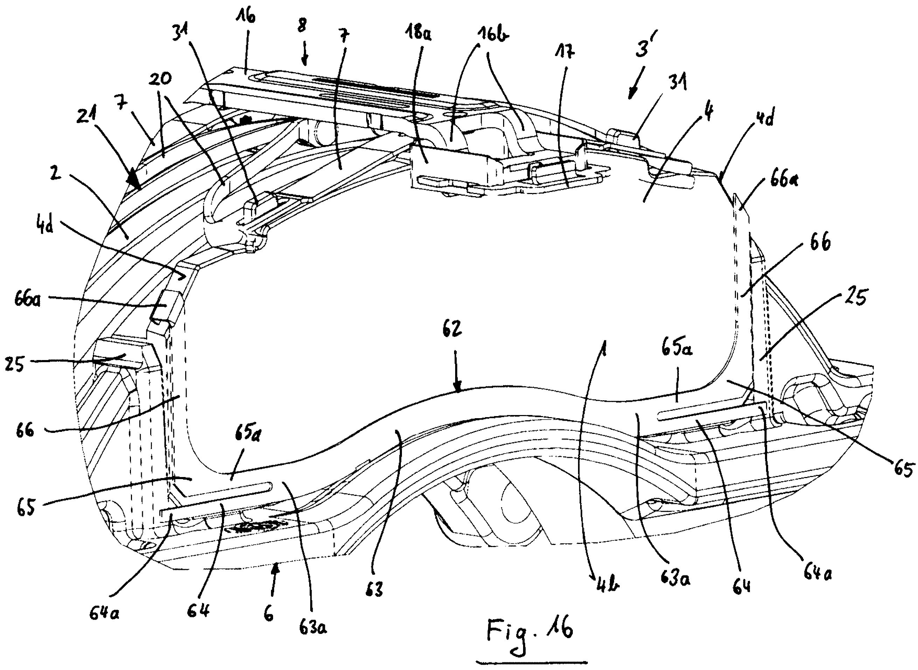

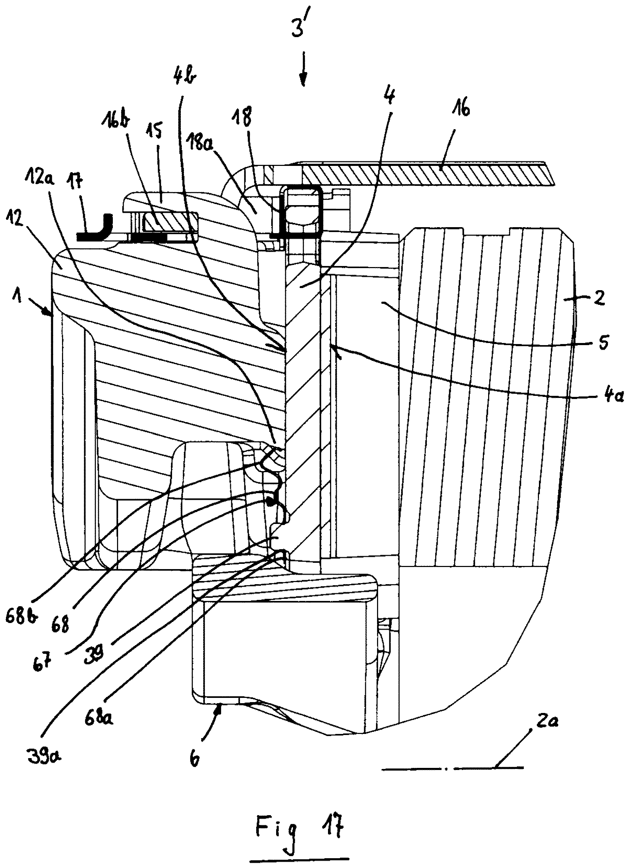

In den Figuren 16 und 17 sind Beispiele von Varianten von Rückstellelementen für den rückenseitigen Bremsbelag 3' dargestellt.

**Figur 16** zeigt eine schematische Perspektivansicht der Druckseite 4b der Belagträgerplatte 4 des rückenseitigen Bremsbelags 3' in seinem zugehörigen Belagschacht in dem Bremsträger 6 zwischen den Bremsträgerhörnern 25. Zudem ist der Belaghaltebügel 16 mit seinem rückenseitigen Halteende 16b dargestellt, wobei das Halteende 16b mit der Klammer 18a und dem Sicherungselement 17 versehen ist (nicht näher erläutert).

Das Rückstellelement 62 umfasst einen Zentralabschnitt 63 mit zwei Verbindungsabschnitten 63a, zwei Federarme 64 mit jeweils einem Federende 64a, zwei weitere Verbindungsabschnitte 65 und zwei weitere Federarme 66 mit jeweils einem Klammerende 66a.

Der Zentralabschnitt 63 ist in einem unteren Randbereich der Druckseite 4b der Belagträgerplatte 4 angeordnet und im Wesentlichen wie dieser Bereich geschwungen ausgebildet. An jedem Ende der Rundung weist der Zentralabschnitt 63 auf beiden Seiten den Verbindungsabschnitt 63a auf.

An jedem Verbindungsabschnitt 63a ist im unteren Bereich jeweils einer der Federarme 64 angebracht. Jeder Federarm 64 erstreckt sich in tangentialer Richtung in Bezug auf die Bremsscheibe 2 bis über eine Seite des jeweiligen Bremsträgerhorns 25, wobei das jeweilige Federende 64a auf einer Seitenfläche des jeweiligen Bremsträgerhorns 25.

Oberhalb eines jeden Federarms 64 ist jeweils einer der weiteren Verbindungsabschnitte 65 mit einem Arm 65a mit dem jeweiligen Verbindungsabschnitt 63a verbunden. Die Arme 65a erstrecken sich jeweils parallel zu den Federarmen 64 auf der Druckseite 4b von dem zugehörigen Verbindungsabschnitt 63a bis zu dem jeweiligen Seitenrand der Belagträgerplatte 4 und gehen in den zugehörigen Verbindungsabschnitt 65 über.

Die Verbindungsabschnitte 65 sind an die äußere Form der Eckbereiche der Belagträgerplatte 4 angepasst, diagonal zur Mitte der Belagträgerplatte 4 hin verbreitert und abgerundet und gehen jeweils nach oben hin in den Federarm 66 über.

Jeder Federarm 66 erstreckt sich längs eines Seitenbereiches der Belagträgerplatte 4 auf der Druckseite 4b bis zu einem schrägen, oberen Seitenabschnitt 4d der Belagträgerplatte 4. Jedes obere Ende der Federarme 66 ist mit einem der Klammerabschnitte 66a versehen, welche jeweils einen schrägen Seitenabschnitt 4d übergreifend an der Belagträgerplatte 4 befestigt sind.

Es ist auch möglich, dass der Zentralabschnitt 63 mit einem oder mehreren, nicht gezeigten, z.B. Klammerabschnitten, an der Belagträgerplatte 4 befestigt ist

Auf diese Weise ist das Rückstellelement 62 zum Einen durch die Klammerabschnitte 66a der Federarme 66 an der Belagträgerplatte 4 des rückenseitigen Bremsbelags 3' angebracht und zum Anderen über die Federarme 64 mit deren Federenden 64a an den Bremsträgerhörner 25 ortsfest fixiert. Diese Befestigung kann auch schon eine Vorspannung des Rückstellelementes 62 bewirken.

Bei einem Bremsvorgang wird das Rückstellelement 62 wie oben erläutert gespannt und übt auf die Belagträgerplatte 4 durch die Befestigung an ihr Zugkräfte zur Rückstellung des rückenseitigen Bremsbelags 3' von der Bremsscheibe 2 weg nach einem Bremsvorgang aus.

**Figur 17** stellt eine Schnittansicht in einer durch die Bremsscheibendrehachse 2a verlaufenden Ebene der Scheibenbremse mit dem rückenseitigen bzw. äußeren Bremsbelag 3' mit einem weiteren Rückstellelement 67 dar.

Das Rückstellelement 67 ist als eine Art Blattfeder mit einem Federkörper 68 mit jeweils einem Federende 68a, 68b ausgebildet. Das eine Federende 68a ist in einem unteren Bereich der rückenseitigen Belagträgerplatte 4 auf deren Druckseite 4b an einem Haltebügel 39 angelenkt. Das andere Federende 68b krallt sich in geeigneter Ausgestaltung an einem Halteabschnitt 12a des Sattelrückens 12 des Bremssattels 1 fest. Es ist möglich, dass das Rückstellelement 67 mittig oder zwei dieser Rückstellelemente 67 an den Ecken oder auch mehrere über die Länge des unteren Bereiches der Belagträgerplatte 4 verteilt vorgesehen sind.

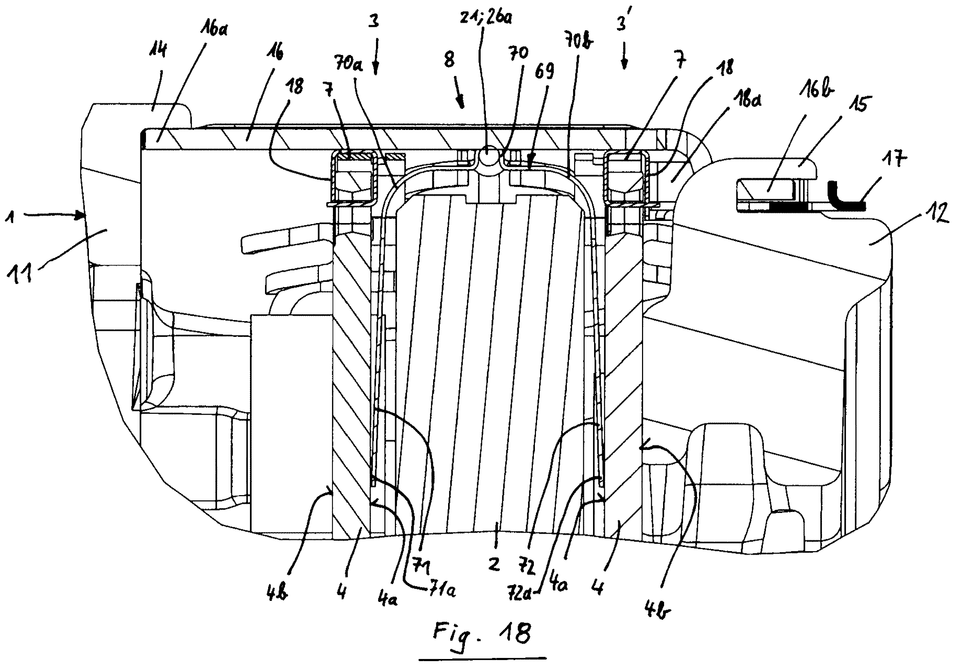

In **Figur 18** ist eine schematische Schnittansicht einer weiteren Variante der zweiten Funktionsgruppe der Spreizeinrichtung 8 einem Rückstellelement 69 in einer Schnittansicht in einer durch die Bremsscheibendrehachse 2a verlaufenden Ebene der Scheibenbremse mit den Bremsbelägen 3, 3' dargestellt.

In dieser Variante ist das Rückstellelement 69 bügelartig mit sind zwei sich gegenüberliegende Federarmen 71, 72 in Federform, z.B. Blatt- oder/und Drahtfeder, ausgebildet. Jeder Federarm 71, 72 ist mit seinem oberen Ende jeweils an einem Zentralabschnitt 70 über einen Verbindungsbogen 70a, 70b angebracht. Der Zentralabschnitt 70 des Rückstellelementes 69 ist an dem Zentralabschnitt 26a des Haltebogens 21 der Spreizeinrichtung 8 befestigt, wobei er um den Zentralabschnitt 26a z.B. herum gebogen ist.

Von einem unteren Ende eines jeden Verbindungsbogens 70a, 70b aus erstreckt sich jeder Federarm 71, 72 nach unten in Richtung auf die Bremsscheibendrehachse 2a bis in den Bereich der Unterseite eines jeden Bremsbelags 3 zu. Jeder Federarm 71, 72 weist ein freies Ende mit jeweils einem Andruckschenkel 71a, 72a auf und ist jeweils in einem länglichen Zwischenraum zwischen Reibbelag 5 und der Belagseite 4b der Belagträgerplatte 4 angeordnet, wobei die Andruckschenkel 71a, 72a jeweils mit der jeweiligen Belagträgerplatte 4 in Kontakt stehen.

In dieser Ausführung üben die Federarme 71, 72 des Rückstellelementes 69 jeweils eine Druckkraft in Richtung der Bremsscheibendrehachse 2a von der Bremsscheibe 2 weg weisend auf die Bremsbeläge 3, 3' aus, wodurch die Bremsbeläge 3 nach jedem Bremsvorgang durch die Federarme 71, 72 des Rückstellelementes 69 zusätzlich zu den Federarmen 20 der Spreizeinrichtung 8 im unteren Bereich für eine Rückstellung mit einer Kraft beaufschlagt werden.

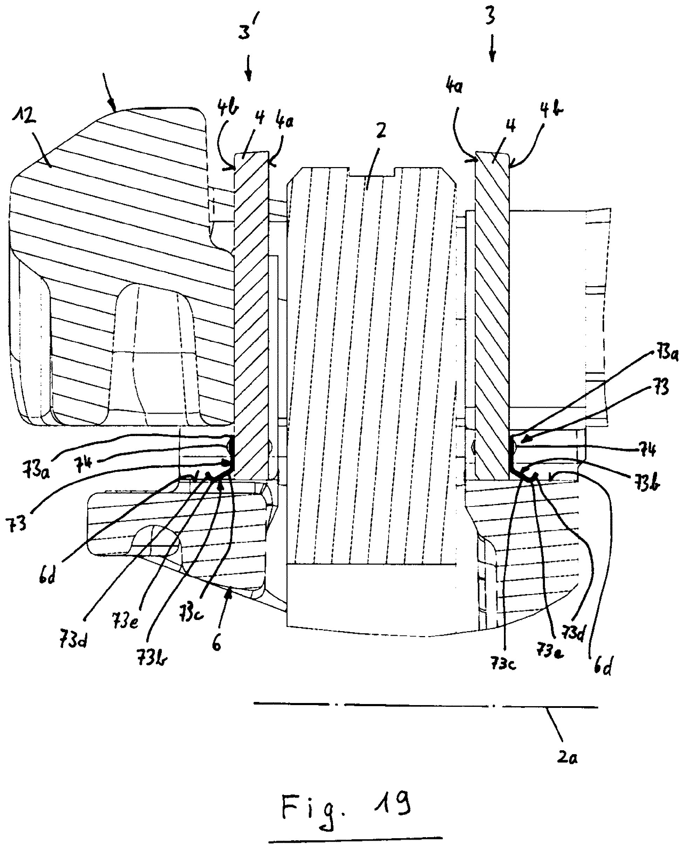

**Figur 19** zeigt eine schematische Teilschnittansicht der erfindungsgemäßen Scheibenbremse 10 nach Figur 1 mit Führungselementen 73.

Jedes Führungselement 73 weist einen Befestigungsabschnitt 73a und einen daran befestigten Führungsabschnitt 73b auf. Der Befestigungsabschnitt 73a ist als eine Art Lasche ausgebildet und geht an seiner Unterseite zunächst in einen von einer Ebene des Befestigungsabschnitts 73a abgebogenen Arm 73c des Führungsabschnitts 73b über. Hier ist der Arm 73c um ca. 45° hochgebogen. An dem freien Ende des nach unten abgebogenen Arms 73c ist ein Endabschnitt 73d angebracht, der um ca. 90° von einer Ebene des Arms 73c in gleicher Biegerichtung wie der Arm 73c hochgebogen ist, wobei eine Auflageabschnitt 73e gebildet ist.

Die Führungselemente 73 sind im unteren Bereich einer jeden Belagträgerplatte 4 der Bremsbeläge 3, 3' derart angebracht, dass ihre Auflageabschnitte 73d auf dem jeweiligen Belagschachtboden 6d (siehe auch Figur 11) aufliegen. Dabei sind die Befestigungsabschnitte 73a jeweils auf der Druckseite 4b einer jeweiligen Belagträgerplatte 4 mittels eines Befestigungselementes 74, z.B. Niet, befestigt. Es ist möglich, dass an jeder Belagträgerplatte 4 ein Führungselement 73 in der Mitte oder mehrere Führungselemente 73 über die Länge der Belagträgerplatte 4 verteilt angeordnet sind.

Die Führungselemente 73 vergrößern eine Auflagefläche der jeweiligen Belagträgerplatte 4 auf dem Belagschachtboden 6d in Richtung der Bremsscheibendrehachse 2a. Dabei üben die Führungselemente 73 keine Kraft auf die zugehörigen Bremsbeläge 3, 3' auf, sondern geben den Bremsbelägen 3, 3' jeweils eine gewisse Vorzugsrichtung, um ein Kippen der Bremsbeläge 3, 3' zu verhindern, wenn die Bremsbeläge 3, 3' z.B. durch die Federarme 20 der Spreizeinrichtung 8 durch deren Krafteinwirkung an der Oberseite der Belagträgerplatten 4 nach einem Bremsvorgang wie oben schon erläutert zurückbewegt werden.

Die Erfindung wird durch die oben beschriebenen Ausführungsbeispiele nicht eingeschränkt. Sie ist im Rahmen der beigefügten Ansprüche modifizierbar.

### BEZUGSZEICHENLISTE

- 1: Bremssattel
- 2: Bremsscheibe
- 2a: Bremsscheibendrehachse
- 3,3': Bremsbelag
- 4: Belagträgerplatte
- 4a: Belagseite
- 4b: Druckseite
- 4c: Auflagefläche
- 4d, e: Seitenabschnitt
- 5: Reibbelag
- 6: Bremsträger
- 6a: Befestigungsseite
- 6b: Lageraufnahme
- 6c: Brückenverbinder
- 6d: Belagschachtboden
- 7: Belaghaltefeder
- 8: Spreizeinrichtung
- 9: Öffnung
- 10: Scheibenbremse
- 11: Zuspannabschnitt
- 12: Sattel rücken
- 12a: Halteabschnitt
- 13: Zugstrebe
- 14, 15: Halteabschnitt
- 16: Belaghaltebügel
- 16a, 16b: Halteende
- 17: Sicherungselement
- 18: Klammerelement
- 18a: Klammer
- 19: Bodenblech
- 20: Federarm
- 20a: Druckabschnitt
- 20b: Verbindungsabschnitt
- 20c: Haubenverbinder
- 20d: Endabschnitt
- 20e: Auflagefläche
- 21: Haltebogen
- 21a: Bügel
- 21b: Sicherung
- 22: Langloch
- 23: Längsverbinder
- 24: Stift
- 25: Bremsträgerhorn
- 25a: Bohrung
- 26: Mittelschenkel
- 26a: Zentralabschnitt
- 26b: Verbreiterung
- 26c: Sicherungselement
- 26d: Nut
- 27: Endschenkel
- 27a: Befestigungsabschnitt
- 28: Endabschnitt
- 29: Lasche
- 30: Zapfen
- 31: Vorsprung
- 32: Haltezapfen
- 33: Halter
- 33a: Ausnehmung
- 34: Halter
- 35: Haltewinkel
- 35a: Schenkel
- 36: Halter
- 36a: Halteöffnung
- 37, 38, 39: Haltebügel
- 37a, 38a, 39a: Halteöffnung
- 40: Rückstellelement
- 41: Zentralabschnitt
- 42: Federarm
- 43: Befestigungsabschnitt
- 44: Lasche
- 44a: Befestigungsloch
- 45: Federarm
- 45a: Zentralabschnitt
- 45b: Endabschnitt
- 46: Rückstellelement
- 47: Federarm
- 47a: Einspannende
- 47b: Verbindung
- 48: Federarm
- 48a: Verbindung
- 49: Befestigungsabschnitt
- 49a: Öffnung
- 50: Rückstellelement
- 51, 54, 56: Längsglied
- 51a, 51a, 56a: Klemmabschnitt
- 52, 53, 55: Querverbinder
- 57: Federkörper
- 58: Längsglied
- 58a: Querverbinder
- 58b, 58c: Endabschnitt
- 59: Halterung
- 59a: Halterabschnitt
- 59b: Halterlasche
- 60: Federkörper
- 60a: Endabschnitt
- 60b: Befestigungsabschnitt
- 61: Federplatte
- 61a: Endabschnitt
- 61b: Befestigungsabschnitt
- 62: Rückstellelement
- 63: Zentralabschnitt
- 63a: Verbindungsabschnitt
- 64: Federarm
- 64a: Federende
- 65: Verbindungsabschnitt
- 65a: Arm
- 66: Federarm
- 66a: Klammerende
- 67: Rückstellelement
- 68: Federkörper
- 68a: Einspannende
- 68b: Krallende
- 69: Rückstellelement
- 70: Zentralabschnitt
- 70a, 70b: Verbindungsbogen
- 71, 72: Federarm
- 71a, 72a: Andruckschenkel
- 73: Führungselement
- 73a: Befestigungsabschnitt
- 73b: Führungsabschnitt
- 73c: Arm
- 73d: Endabschnitt
- 73e: Auflageabschnitt
- 74: Befestigungselement
- AS: Auslaufseite
- ES: Einlaufseite

## Patentansprüche

1. Scheibenbremse (10) für ein Nutzfahrzeug, mit einem eine Bremsscheibe (2) übergreifenden, als Schiebesattel ausgebildeten Bremssattel (1), der an einem ortsfesten Bremsträger (6) befestigt ist und eine zentrale Öffnung (9) über der Bremsscheibe (2) aufweist, zwei im Bremssattel (1) angeordneten, gegensinnig bewegbaren, jeweils eine Belagträgerplatte (4) und einen darauf befestigten Reibbelag (5) aufweisenden Bremsbelägen (3, 3'), von denen ein aktionsseitiger bzw. zuspannseitiger Bremsbelag (3), mittels einer Zuspanneinrichtung über mindestens einen Bremsstempel gegen die Bremsscheibe (2) pressbar ist, sowie mindestens einer Rückstelleinrichtung, mit der der Bremssattel (1) nach einem bremsbedingten Verschieben und Lösen der Bremse rückführbar ist, wobei die Rückstelleinrichtung eine an den sich gegenüberliegenden Bremsbelägen (3) angreifenden, entgegen der jeweiligen Zuspannrichtung gleich wirkenden Spreizeinrichtung (8) mit an der jeweiligen Belagträgerplatte (4) angreifenden federnden Spreizelementen aufweist,
wobei die Spreizeinrichtung (8) in der zentralen Öffnung (9) angeordnet ist, wobei die Spreizelemente direkt oder indirekt außerhalb der Reibbeläge (5) an mindestens zwei zur Mitte abständig zueinander angeordneten Anlagebereichen der Bremsbeläge (3) angreifen, wobei die Anlagebereiche jeweils eine Anlagefläche und eine Auflagefläche (4c) aufweisen, an welchen die Spreizelemente bewegbar angeordnet sind,
**dadurch gekennzeichnet, dass**
die Spreizeinrichtung (8) Federarme (20) aufweist, von denen jeweils zwei an einer zugeordneten Belagträgerplatte (4) anliegen, wobei die Federarme (20) in dem zentralen Bereich der Öffnung (9) miteinander verbunden sind, wobei die Federarme (20) mit einem Haltebogen (21) verbunden sind, der am Bremsträger (6) angebracht ist,
wobei die Federarme (20) als zwei Paare von Federarmen (20) ausgebildet sind, wobei die Paare sich gegenüberliegend in Querrichtung der Öffnung (9) so angeordnet sind, dass sie mit inneren Enden, die zur Mitte der Öffnung (9) weisen, an dem Haltebogen (21) befestigt sind, wobei ihre äußeren freien Enden mit den Belagträgerplatte (4) der Bremsbeläge (3, 3') zusammenwirken, wobei die inneren Enden eines jeden Paares von Federarmen (20) jeweils mit einem Haubenverbinder (20c) in Hülsenform verbunden sind, wobei der Haubenverbinder (20c) um einen Zentralabschnitt (26a) des Haltebogens (21) umgebogen und an dem Zentralabschnitt (26a), welcher einen kreisförmigen Querschnitt aufweist, drehbar und verschiebbar angebracht sind,
wobei jeder Federarm (20) endseitig mit einem Druckabschnitt (20a) ausgebildet ist, welcher in seiner Längsrichtung mit einem Langloch (22) ausgebildet ist, das ein Führungsabschnitt des Federarms (20) der Spreizeinrichtung (8) ist, wobei jeder Druckabschnitt (20a) jeweils auf einer Auflagefläche (4c) einer jeweiligen Belagträgerplatte (4) aufliegt, wobei die Langlöcher (22) eines jeden Druckabschnitts (20a) jeweils mit einer Anlagefläche der Belagträgerplatte (4) in Zusammenwirkung stehen,
wobei ein mit der Belagträgerplatte (4) fest verbundener Stift (24) die mit dem jeweiligen Langloch (22) in Zusammenwirkung stehende Anlagefläche der Belagträgerplatte (4) aufweist, wobei die Auflageflächen (4c) jeweils tangential zu der Bremsscheibe (2) verlaufen und einer Ebene liegen.

2. Scheibenbremse (10) nach Anspruch 1,
**dadurch gekennzeichnet, dass**
sich die Spreizelemente ausgehend von einem zentralen Bereich in der Mitte der Öffnung (9) von innen nach außen zu den zur Mitte abständig zueinander angeordneten Anlagebereichen erstrecken.

3. Scheibenbremse (10) nach Anspruch 2,
**dadurch gekennzeichnet, dass**
sich die Spreizelemente ausgehend von einem zentralen Bereich in der Mitte der Öffnung (9) von innen nach außen zu den gleichmäßig zur Mitte abständig zueinander angeordneten Anlagebereichen erstrecken.

4. Scheibenbremse (10) nach Anspruch 2 oder 3,
**dadurch gekennzeichnet, dass**
der sich der zentrale Bereich der Öffnung (9) beiderseits einer virtuellen Mitte der Öffnung (9) in etwa parallel zu der Ebene der Bremsscheibe (2) in einer Länge in einem Bereich von 30 bis 50 % einer Längsachse der Öffnung (9) erstreckt.

5. Scheibenbremse nach einem der vorhergehenden Ansprüche,
**dadurch gekennzeichnet, dass**
der Haltebogen (21) mit zwei, einen Belagschacht begrenzenden Bremsträgerhörnern (25) verbunden ist, wobei der Haltebogen (21) C-förmig geformt ist mit zwei sich gegenüberliegenden Endschenkeln (27) sowie einem Mittelschenkel (26).

6. Scheibenbremse nach Anspruch 5,
**dadurch gekennzeichnet, dass**
die Endschenkel (27) jeweils eine Lasche (29) aufweisen, in die Zapfen (30) der Bremsträgerhörner (25) eingesteckt sind.

7. Scheibenbremse nach Anspruch 6,
**dadurch gekennzeichnet, dass**
die Endschenkel (27) jeweils einen Befestigungsabschnitt (27a) aufweisen, welcher in zu dem Befestigungsabschnitt (27a) korrespondierende Aufnahmen in dem jeweiligen Bremsträgerhorn (25) eingesetzt und befestigt ist..

8. Scheibenbremse nach einem der vorhergehenden Ansprüche,
**dadurch gekennzeichnet, dass**
die Spreizeinrichtung (8) zumindest ein zusätzliches Rückstellelement (40, 46, 50, 62, 67,69) aufweist, welches zusätzlich zu dem Angriffspunkt/den Angriffspunkten der Federarme (20) in einem weiteren Angriffspunkt an der jeweiligen Belagträgerplatte (4) eines Bremsbelags (3, 3') angreift.

9. Scheibenbremse nach Anspruch 8,
**dadurch gekennzeichnet, dass**
das zumindest eine Rückstellelement (40) mit einem Abschnitt in einem unteren Bereich der Belagträgerplatte (4) eines zuspannseitigen Bremsbelags (3) auf einer Druckseite (4b) der Belagträgerplatte (4) an einem Haltezapfen (32) befestigt ist, wobei das zumindest eine Rückstellelement (40) mit einem weiteren Abschnitt in einem unteren Bereich einer Bodenplatte (19) eines Zuspannabschnitts (11) des Bremssattels (1) angebracht ist.

10. Scheibenbremse nach Anspruch 9,
**dadurch gekennzeichnet, dass**
das zumindest eine Rückstellelement (40) als ein Federelement mit einem Zentralabschnitt (41, 45a), zwei Federarmen (42, 45), zwei Befestigungsabschnitten (43) mit jeweils einer U-förmigen Lasche (44) ausgebildet ist, wobei der Zentralabschnitt (41) an dem Haltezapfen (32) der Belagträgerplatte (4) befestigt ist, und wobei jeder Federarm (42) mit dem Befestigungsabschnitt (43) an der Bodenplatte (19) angebracht ist.

11. Scheibenbremse nach Anspruch 10,
**dadurch gekennzeichnet, dass**
der Zentralabschnitt (45a) und die zwei Federarme (45) aus einem Federdraht gebildet sind, wobei der Zentralabschnitt (45a) an einem Halter (33) in einem unteren Bereich der Belagträgerplatte (4) befestigt ist.

12. Scheibenbremse nach Anspruch 8,
**dadurch gekennzeichnet, dass**
das zumindest eine Rückstellelement (46) einen ersten Federarm (47) mit einem Einspannende (47a) und einer Verbindung, einen zweiten Federarm (48) mit einer Verbindung (48a) und einen Befestigungsabschnitt (49) mit einer Öffnung (49a) umfasst, wobei der erste Federarm (47) an der Druckseite (4b) der Belagträgerplatte (4) des zuspannseitigen Bremsbelags (3) mit seinem Einspannende (47a) an einem Halter (34) befestigt ist, wobei der zweite Federarm (48) über eine Verbindung (47b) mit dem ersten Federarm (47) verbunden und parallel zu diesem angeordnet ist, und wobei der Befestigungsabschnitt (49) mit seiner Öffnung (49a) vor einer Öffnung einer Lageraufnahme (6b) des Bremsträgers (6) koaxial zu dieser zwischen dem Bremsträger (6) und einem Lagerholm des Bremssattels (1) befestigt ist.

13. Scheibenbremse nach Anspruch 8,
**dadurch gekennzeichnet, dass**
das zumindest eine Rückstellelement (50) mittig als ein zentrales Rückstellelement (50) in vertikaler Richtung an der Druckseite (4b) der Belagträgerplatte (4) des zuspannseitigen Bremsbelags (3) angeordnet und sowohl an der Oberseite und der Unterseite der Belagträgerplatte (4) befestigt ist, wobei eine ortsfeste Fixierung eines Endes des zentralen Rückstellelementes (50) mittig an einem zuspannseitigen Brückenverbinder (6c) des Bremsträgers (6) gebildet ist.

14. Scheibenbremse nach Anspruch 13,
**dadurch gekennzeichnet, dass**
das zumindest eine zentrale Rückstellelement (50) zwei seitliche, parallel zueinander angeordnete Längsglieder (51) auf, deren obere Enden als Klemmabschnitte (51a) als Klammern die Oberseite der Belagträgerplatte (4) fest umgreifen, wobei die beiden Längsglieder (51) an ihren unteren Enden mit Klemmabschnitten (51b) versehen sind, die als Klammer die Unterseite der Belagträgerplatte (4) fest umgreifen, wobei die Längsglieder (51) in ihrem oberen Bereich durch einen Querverbinder (52) verbunden sind, und in ihrem unteren Bereich jeweils durch einen Querverbinder (53) mit jeweils einem weiteren Längsglied (54) verbunden sind, wobei sich die beiden Längsglieder (54) jeweils parallel zu den äußeren Längsgliedern (51) nach oben erstrecken und an ihren oberen Enden mit einem Querverbinder (55) verbunden sind, an welchem ein zentrales Längsglied (56) angebracht ist und sich parallel zu den anderen Längsgliedern (51, 54) nach unten über die Klemmabschnitte (51b) hinaus erstreckt und in einem eigenen Klemmabschnitt (56a) endet, der an dem zuspannseitigen Brückenverbinder (6c) des Bremsträgers (6) fixiert ist.

15. Scheibenbremse nach Anspruch 8,
**dadurch gekennzeichnet, dass**
das zumindest eine Rückstellelement (50) mittig als ein zentrales Rückstellelement (50) in vertikaler Richtung an der Druckseite (4b) der Belagträgerplatte (4) des zuspannseitigen Bremsbelags (3) angeordnet und in einem Bereich der Unterseite der Belagträgerplatte (4) befestigt ist, wobei eine ortsfeste Fixierung eines Endes des zentralen Rückstellelementes (50) an einem zuspannseitigen Halteende (16a) eines Belaghaltebügels (16) gebildet ist.

16. Scheibenbremse nach Anspruch 15,
**dadurch gekennzeichnet, dass**
das zumindest eine zentrale Rückstellelement (50) einen drahtförmigen Federkörper (57) mit zwei parallel zueinander angeordneten Längsgliedern (58) aufweist, wobei die Längsglieder (58) durch einen Querverbinder (58a) verbunden sind, wobei der Querverbinder (58a) im unteren Bereich der Belagträgerplatte (4) gehalten ist und Endabschnitte (58b, 58c) der Längsglieder (58) des Federkörpers (57) über eine Halterung (59) an dem zuspannseitigen Halteende (16a) des Belaghaltebügels (16) angebracht sind.

17. Scheibenbremse nach Anspruch 15,
**dadurch gekennzeichnet, dass**
das zumindest eine zentrale Rückstellelement (50) einen drahtförmigen Federkörper (57) mit zwei parallel zueinander angeordneten Längsglieder (58) aufweist, wobei die Längsglieder (58) durch einen Querverbinder (58a) verbunden sind, wobei der Querverbinder (58a) über eine Halterung (59) und Endabschnitte (58b, 58c) der Längsglieder (58) des Federkörpers (57) im unteren Bereich der Belagträgerplatte (4) gehalten sind.

18. Scheibenbremse nach Anspruch 15,
**dadurch gekennzeichnet, dass**
das zumindest eine zentrale Rückstellelement (50) einen drahtförmigen Federkörper (60) mit einem Endabschnitt (60a) und einem Befestigungsabschnitt (60b) aufweist, wobei der Endabschnitt (60a) im unteren Bereich der Belagträgerplatte (4) gehalten ist und der Befestigungsabschnitt (60b) an dem zuspannseitigen Halteende (16a) des Belaghaltebügels (16) angebracht ist.

19. Scheibenbremse nach Anspruch 15,
**dadurch gekennzeichnet, dass**
das zumindest eine zentrale Rückstellelement (50) eine Federplatte (61) mit einem Endabschnitt (61a) und einem Befestigungsabschnitt (61b) aufweist, wobei der Endabschnitt (61a) im unteren Bereich der Belagträgerplatte (4) gehalten ist und der Befestigungsabschnitt (61b) an dem zuspannseitigen Halteende (16a) des Belaghaltebügels (16) angebracht ist.

20. Scheibenbremse nach Anspruch 8,
**dadurch gekennzeichnet, dass**
das zumindest eine Rückstellelement (62) mit einem Abschnitt in einem unteren Bereich der Belagträgerplatte (4) des rückenseitigen Bremsbelags (3') auf der Druckseite (4b) der Belagträgerplatte (4) befestigt ist, wobei das zumindest eine Rückstellelement (62) mit einem weiteren Abschnitt mit einem Bremsträgerhorn (25) des ortsfesten Bremsträgers (6) in Zusammenwirkung steht.

21. Scheibenbremse nach Anspruch 20,
**dadurch gekennzeichnet, dass**
das Rückstellelement (62) einen Zentralabschnitt (63) mit zwei Verbindungsabschnitten (63a), zwei Federarme (64) mit jeweils einem Federende (64a), zwei weitere Verbindungsabschnitte (65) und zwei weitere Federarme (66) mit jeweils einem Klammerende (66a) umfasst, wobei der Zentralabschnitt (63) mit den links und rechts an ihm angebrachten Verbindungsabschnitten (63a) und den daran jeweils angebrachten Federarmen (64, 65a) in einem unteren Randbereich auf der Druckseite (4b) der Belagträgerplatte (4) angeordnet sind, wobei die weiteren Verbindungsabschnitte (65) in den unteren Eckbereichen auf der Druckseite (4b) der Belagträgerplatte (4) angeordnet sind und mit den weiteren, vertikalen Federarmen (66), die sich jeweils in einem Seitenbereich auf der Druckseite (4b) der Belagträgerplatte (4) erstrecken, verbunden sind, wobei die Klammerenden (66a) eines jeden weiteren Federarms (66) einen schrägen Seitenabschnitt (4d) übergreifend an der Belagträgerplatte (4) befestigt sind, und wobei die Federenden (64a) jeweils mit einem Bremsträgerhorn (25) in Kontakt stehen.

22. Scheibenbremse nach Anspruch 8,
**dadurch gekennzeichnet, dass**
die Spreizeinrichtung (8) zumindest ein weiteres zusätzliches Rückstellelement (67) aufweist, welches zwischen einem unteren Bereich der Belagträgerplatte (4) des rückenseitigen Bremsbelags (3) und einem Sattelrücken (12) des Bremssattels (1) angeordnet ist.

23. Scheibenbremse nach Anspruch 22,
**dadurch gekennzeichnet, dass**
das zumindest eine weitere Rückstellelement (67) als eine Art Blattfeder mit einem Federkörper (68) mit jeweils einem Federende (68a, 68b) ausgebildet ist, wobei das eine Federende (68a) in einem unteren Bereich der rückenseitigen Belagträgerplatte (4) auf deren Druckseite (4b) an einem Haltebügel (39) angelenkt ist und das andere Federende (68b) an einem Halteabschnitt (12a) des Sattelrückens (12) des Bremssattels (1) angelenkt ist.

24. Scheibenbremse nach Anspruch 8,
**dadurch gekennzeichnet, dass**
die Spreizeinrichtung (8) zumindest ein zusätzliches Rückstellelement (69) mit zwei sich gegenüberliegen Federarmen (71, 72) aufweist, wobei jeder Federarm (71, 72) mit seinem oberen Ende jeweils an einem Zentralabschnitt (70) über einen Verbindungsbogen (70a, 70b) angebracht ist, wobei der Zentralabschnitt (70) des Rückstellelementes (69) an einem Zentralabschnitt (26a) des Haltebogens (21) der Spreizeinrichtung (8) befestigt ist, und wobei jeweils ein freies Ende eines jeden Federarms (71, 72) mit jeweils einem Andruckschenkel (71a, 72a) mit der jeweiligen Belagträgerplatte (4) eines jeden Bremsbelags (3, 3') in Kontakt steht.

25. Scheibenbremse nach Anspruch 24,
**dadurch gekennzeichnet, dass**
die Federarme (71, 72) mit ihren Andruckschenkeln (71a, 72a) jeweils in einem länglichen Zwischenraum zwischen einem Reibbelag (5) und einer Belagseite (4b) der jeweiligen Belagträgerplatte (4) angeordnet sind, wobei die Andruckschenkel (71a, 72a) jeweils mit der Belagseite (4b) der jeweiligen Belagträgerplatte (4) in Kontakt stehen und jeweils eine Druckkraft in Richtung von der Bremsscheibe (2) weg weisend auf die Bremsbeläge (3, 3') ausüben.

26. Scheibenbremse nach einem der vorhergehenden Ansprüche,
**dadurch gekennzeichnet, dass**
im unteren Bereich einer jeden Belagträgerplatte (4) zumindest ein Führungselement (73) vorgesehen ist, welches einen Befestigungsabschnitt (73a) und einen daran befestigten Führungsabschnitt (73b) mit einem Auflageabschnitt (73e) aufweist, wobei das zumindest eine jeweilige Führungselement mit dem Befestigungsabschnitt (73a) auf der Druckseite (4b) der jeweiligen Belagträgerplatte (4) derart befestigt ist, dass der jeweilige Auflageabschnitt (73e) auf dem jeweiligen Belagschachtboden (6d) aufliegt.

27. Bremsbelagsatz für eine Scheibenbremse (10) für ein Nutzfahrzeug, mit einem eine Bremsscheibe (2) übergreifenden, als Schiebesattel ausgebildeten Bremssattel (1), der an einem ortsfesten Bremsträger (6) befestigt ist und eine zentrale Öffnung (9) über der Bremsscheibe (2) aufweist, sowie mindestens einer Rückstelleinrichtung, mit der der Bremssattel (1) nach einem bremsbedingten Verschieben und Lösen der Bremse rückführbar ist,
wobei der Bremsbelagsatz mindestens zwei Bremsbeläge (3, 3') mit jeweils einer Belagträgerplatte (4) und einem auf der Belagträgerplatte (4) angebrachten Reibbelag (5) und eine Spreizeinrichtung (8) aufweist,
wobei die Spreizeinrichtung (8) Federarme (20) aufweist, wobei die Federarme (20) mit einem Haltebogen (21) verbunden sind der am Bremsträger (60) anbringbar ist,
wobei die Federarme (20) als zwei Paare von Federarmen (20) ausgebildet sind, die sich gegenüberliegend so angeordnet sind, dass sie mit inneren Endenan dem Haltebogen (21) befestigt sind,
wobei die inneren Enden eines jeden Paares von Federarmen (20) jeweils mit einem Haubenverbinder (20c) in Hülsenform verbunden sind,
wobei der Haubenverbinder (20c) um einen Zentralabschnitt (26a) des Haltebogens (21) umgebogen und an dem Zentralabschnitt (26a), welcher einen kreisförmigen Querschnitt aufweist, drehbar und verschiebbar angebracht ist, wobei jeder Federarm (20) endseitig mit einem Druckabschnitt (20a) ausgebildet ist, welcher in seiner Längsrichtung mit einem Langloch (22) ausgebildet ist, das ein Führungsabschnitt des Federarms (20) der Spreizeinrichtung (8) ist, wobei die Belagträgerplatten (4) außerhalb der Reibbeläge (5) an mindestens zwei zur Mitte abständig zueinander angeordneten Anlagebereichen jeweils eine Anlagefläche und eine Auflagefläche (4c) aufweisen,
wobei an jedem Ende einer Belagträgerplatte (4) ein Stift (24) fest mit der Belagträgerplatte (4) verbunden ist und ein Ende des Stiftes (24) von der Belagträgerplatte (4) hervorsteht und wobei sich das Ende des Stiftes (24) durch das zugehörige Langloch (22) des jeweiligen Druckabschnitts (20a) eines Federarms (20) der Spreizeinrichtung (8) erstreckt.

28. Bremsbelagsatz nach Anspruch 27,
**dadurch gekennzeichnet, dass**
die Belagträgerplatte (4) eines zuspannseitigen Bremsbelags (3) mit zumindest einem Rückstellelement (40, 46, 50) versehen ist.

29. Bremsbelagsatz nach Anspruch 27 oder 28,
**dadurch gekennzeichnet, dass**
die Belagträgerplatte (4) eines rückenseitigen Bremsbelags (3') mit zumindest einem Rückstellelement (62, 67) versehen ist.

30. Bremsbelagsatz nach Anspruch 27,
**dadurch gekennzeichnet, dass**
jeweils ein länglicher Zwischenraum zwischen einem Reibbelag (5) und einer Belagseite (4b) der jeweiligen Belagträgerplatte (4) angeordnet ist.

31. Bremsbelagsatz nach einem der Ansprüche 27 bis 30,
**dadurch gekennzeichnet, dass**
die Belagträgerplatten (4) im unteren Bereich auf ihren Druckseiten (4b) mit zumindest einem Führungselement (73) versehen sind.

## Claims

1. A disc brake (10) for a utility vehicle, having a brake calliper (1) which engages over a brake disc (2) and which is in the form of a sliding calliper and which is fastened to a positionally static brake carrier (6) and which has a central opening (9) over the brake disc (2), having two brake pads (3, 3') which are arranged in the brake calliper (1) and which are movable in opposite directions and which have in each case one pad carrier plate (4) and one friction pad (5) fastened thereto and of which an action-side or application-side brake pad (3) can be pressed against the brake disc (2) by means of an application device via at least one brake plunger, and having at least one resetting device by means of which the brake calliper (1) can be reset after a braking-induced displacement and release of the brake, wherein the resetting device has a spreading device (8) which engages on the opposite brake pads (3) and which acts equally counter to the respective application direction and which has resilient spreading elements which engage on the respective pad carrier plate (4),
wherein the spreading device (8) is arranged in the central opening (9), wherein the spreading elements engage, outside the friction pads (5), directly or indirectly on at least two abutment regions, arranged spaced apart from one another relative to the centre, of the brake pads (3), wherein the abutment regions have in each case one abutment surface and one bearing surface (4c) on which the spreading elements are movably arranged,
**characterised in that**
the spreading device (8) has spring arms (20), of which in each case two bear against an associated pad carrier plate (4), wherein the spring arms (20) are connected to one another in the central region of the opening (9), wherein the spring arms (20) are connected to a retaining bow (21) which is attached to the brake carrier (6),
wherein the spring arms (20) are formed as two pairs of spring arms (20), wherein the pairs are arranged opposite one another in a transverse direction of the opening (9) such that they are fastened by way of inner ends, which point towards the centre of the opening (9), to the retaining bow (21), wherein their outer free ends interact with the pad carrier plate (4) of the brake pads (3, 3'),
wherein the inner ends of each pair of spring arms (20) are connected in each case to a hood-type connector (20c) of sleeve-like form, wherein the hood-type connector (20c) is bent around a central section (26a) of the retaining bow (21) and attached rotatably and displaceably to the central section (26a), which has a circular cross-section,
wherein each spring arm (20) is formed, at the end, with a thrust section (20a) which, in its longitudinal direction, is formed with an elongated hole (22) which is a guide section of the spring arm (20) of the spreading device (8),
wherein each thrust section (20a) lies in each case on a bearing surface (4c) of a respective pad carrier plate (4), wherein the elongated holes (22) of each thrust section (20a) interact in each case with an abutment surface of the pad carrier plate (4),
wherein a pin (24) fixedly connected to the pad carrier plate (4) has the abutment surface, which interacts with the respective elongated hole (22), of the pad carrier plate (4), wherein the bearing surfaces (4c) run in each case tangentially with respect to the brake disc (2) and lie in a plane.

2. Disc brake (10) according to claim 1,
**characterised in that**
the spreading elements, proceeding from a central region in the centre of the opening (9), extend from the inside outwards to the abutment regions arranged spaced apart from one another with respect to the centre.

3. Disc brake (10) according to claim 2,
**characterised in that**
the spreading elements, proceeding from a central region in the centre of the opening (9), extend from the inside outwards to the abutment regions arranged uniformly spaced apart from one another with respect to the centre.

4. Disc brake (10) according to claim 2 or 3,
**characterised in that**
the central region of the opening (9) extends, to both sides of a virtual centre of the opening (9), approximately parallel to the plane of the brake disc (2) over a length in a range of from 30 to 50% of a longitudinal axis of the opening (9).

5. Disc brake according to one of the preceding claims,
**characterised in that**
the retaining bow (21) is connected to two brake carrier horns (25) which delimit a pad slot, wherein the retaining bow (21) is of C-shaped form with two mutually oppositely situated end limbs (27) and with a centre limb (26).

6. Disc brake according to claim 5,
**characterised in that**
the end limbs (27) have in each case one lug (29) into which pegs (30) of the brake carrier horns (25) are inserted.

7. Disc brake according to claim 6,
**characterised in that**
the end limbs (27) have in each case one fastening section (27a) which is inserted into and fastened in receptacles, which correspond to the fastening section (27a), in the respective brake carrier horn (25).

8. Disc brake according to one of the preceding claims,
**characterised in that**
the spreading device (8) has at least one additional resetting element (40, 46, 50, 62, 67, 69) which, in addition to the engagement point / the engagement points of the spring arms (20), engages at a further engagement point on the respective pad carrier plate (4) of a brake pad (3, 3').

9. Disc brake according to claim 8,
**characterised in that**
the at least one resetting element (40) is fastened by way of one section, in a lower region of the pad carrier plate (4) of an application-side brake pad (3) on a thrust side (4b) of the pad carrier plate (4), to a retaining peg (32), wherein the at least one resetting element (40) is attached by way of a further section in a lower region of a base plate (19) of an application section (11) of the brake calliper (1).

10. Disc brake according to claim 9,
**characterised in that**
the at least one resetting element (40) is formed as a spring element with a central section (41, 45a), two spring arms (42, 45) and two fastening sections (43) with in each case one U-shaped lug (44), wherein the central section (41) is fastened to the retaining peg (32) of the pad carrier plate (4), and wherein each spring arm (42) is attached by way of the fastening section (43) to the base plate (19).

11. Disc brake according to claim 10,
**characterised in that**
the central section (45a) and the two spring arms (45) are formed from a spring wire, wherein the central section (45a) is fastened to a retainer (33) in a lower region of the pad carrier plate (4).

12. Disc brake according to claim 8,
**characterised in that**
the at least one resetting element (46) comprises a first spring arm (47) with a clamping end (47a) and with a connection, a second spring arm (48) with a connection (48a), and a fastening section (49) with an opening (49a), wherein the first spring arm (47) is, on the thrust side (4b) of the pad carrier plate (4) of the application-side brake pad (3), fastened by way of its clamping end (47a) to a retainer (34), wherein the second spring arm (48) is connected by way of a connection (47b) to the first spring arm (47) and is arranged parallel thereto, and wherein the fastening section (49) is, with its opening (49a) in front of an opening of a bearing receptacle (6b) of the brake carrier (6), fastened coaxially with respect thereto between the brake carrier (6) and a bearing beam of the brake calliper (1).

13. Disc brake according to claim 8,
**characterised in that**
the at least one resetting element (50) is arranged centrally as a central resetting element (50) in a vertical direction on the thrust side (4b) of the pad carrier plate (4) of the application-side brake pad (3) and is fastened both to the top side and also to the bottom side of the pad carrier plate (4), wherein a positionally static fixing of one end of the central resetting element (50) is formed centrally on an application-side bridge connector (6c) of the brake carrier (6).

14. Disc brake according to claim 13,
**characterised in that**
the at least one central resetting element (50) has two lateral longitudinal members (51) which are arranged parallel to one another and the upper ends of which, as gripping sections (51a), engage fixedly as clips around the top side of the pad carrier plate (4), wherein the two longitudinal members (51) are equipped, at their bottom ends, with gripping sections (51b) which engage fixedly as clips around the bottom side of the pad carrier plate (4), wherein the longitudinal members (51) are connected in their upper region by means of a transverse connector (52), and are connected in their lower region in each case by means of a transverse connector (53) to in each case one further longitudinal member (54), wherein the two longitudinal members (54) extend in each case upwards parallel to the outer longitudinal members (51) and are connected at their upper ends by means of a transverse connector (55) to which there is attached a central longitudinal member (56), which central longitudinal member extends downwards parallel to the other longitudinal members (51, 54) beyond the gripping sections (51b) and ends in a dedicated gripping section (56a) which is fixed to the application-side bridge connector (6c) of the brake carrier (6).

15. Disc brake according to claim 8,
**characterised in that**
the at least one resetting element (50) is arranged centrally as a central resetting element (50) in a vertical direction on the thrust side (4b) of the pad carrier plate (4) of the application-side brake pad (3) and is fastened in a region of the bottom side of the pad carrier plate (4), wherein a positionally static fixing of one end of the central resetting element (50) is formed on an application-side retaining end (16a) of a pad retaining stirrup (16).

16. Disc brake according to claim 15,
**characterised in that**
the at least one central resetting element (50) has a spring body (57) of wire form with two longitudinal members (58) arranged parallel to one another, wherein the longitudinal members (58) are connected by means of a transverse connector (58a), wherein the transverse connector (58a) is retained in the lower region of the pad carrier plate (4), and end sections (58b, 58c) of the longitudinal members (58) of the spring body (57) are attached by means of a retainer (59) to the application-side retaining end (16a) of the pad retaining stirrup (16).

17. Disc brake according to claim 15,
**characterised in that**
the at least one central resetting element (50) has a spring body (57) of wire form with two longitudinal members (58) arranged parallel to one another, wherein the longitudinal members (58) are connected by means of a transverse connector (58a), wherein the transverse connector (58a) is retained by means of a retainer (59), and end sections (58b, 58c) of the longitudinal members (58) of the spring body (57) are retained in the lower region of the pad carrier plate (4).

18. Disc brake according to claim 15,
**characterised in that**
the at least one central resetting element (50) has a spring body (60) of wire form with an end section (60a) and with a fastening section (60b), wherein the end section (60a) is retained in the lower region of the pad carrier plate (4) and the fastening section (60b) is attached to the application-side retaining end (16a) of the pad retaining stirrup (16).

19. Disc brake according to claim 15,
**characterised in that**
the at least one central resetting element (50) has a spring plate (61) with an end section (61a) and with a fastening section (61b), wherein the end section (61a) is retained in the lower region of the pad carrier plate (4) and the fastening section (61b) is attached to the application-side retaining end (16a) of the pad retaining stirrup (16).

20. Disc brake according to claim 8,
**characterised in that**
the at least one resetting element (62) is fastened by way of one section in a lower region of the pad carrier plate (4) of the rear-side brake pad (3') on the thrust side (4b) of the pad carrier plate (4), wherein the at least one resetting element (62) interacts by way of a further section with a brake carrier horn (25) of the positionally static brake carrier (6).

21. Disc brake according to claim 20,
**characterised in that**
the resetting element (62) comprises a central section (63) with two connecting sections (63a), two spring arms (64) with in each case one spring end (64a), two further connecting sections (65) and two further spring arms (66) with in each case one clip end (66a), wherein the central section (63) is arranged, with the connecting sections (63a) attached thereto on the left and on the right and with the spring arms (64, 65a) attached thereto in each case, in a lower edge region on the thrust side (4b) of the pad carrier plate (4), wherein the further connecting sections (65) are arranged in the lower corner regions on the thrust side (4b) of the pad carrier plate (4) and are connected to the further, vertical spring arms (66) which extend in each case in a side region on the thrust side (4b) of the pad carrier plate (4), wherein the clip ends (66a) of each further spring arm (66) are fastened, so as to engage over an oblique side section (4d), to the pad carrier plate (4), and wherein the spring ends (64a) are in each case in contact with a brake carrier horn (25).

22. Disc brake according to claim 8,
**characterised in that**
the spreading device (8) has at least one further additional resetting element (67), which is arranged between a lower region of the pad carrier plate (4) of the rear-side brake pad (3) and a calliper rear section (12) of the brake calliper (1).

23. Disc brake according to claim 22,
**characterised in that**
the at least one further resetting element (67) is formed as a type of leaf spring with a spring body (68) with in each case one spring end (68a, 68b), wherein one spring end (68a) is articulated, in a lower region of the rear-side pad carrier plate (4) on the thrust side (4b) thereof, on a retaining stirrup (39), and the other spring end (68b) is articulated on a retaining section (12a) of the calliper rear section (12) of the brake calliper (1).

24. Disc brake according to claim 8,
**characterised in that**
the spreading device (8) has at least one additional resetting element (69) with two mutually oppositely situated spring arms (71, 72), wherein each spring arm (71, 72) is attached by way of its upper end in each case to a central section (70) via a connecting bend (70a, 70b), wherein the central section (70) of the resetting element (69) is fastened to a central section (26a) of the retaining bow (21) of the spreading device (8), and wherein in each case one free end of each spring arm (71, 72) is in contact, by way of, in each case, one thrust-imparting limb (71a, 72a), with the respective pad carrier plate (4) of each brake pad (3, 3').

25. Disc brake according to claim 24,
**characterised in that**
the spring arms (71, 72) are, by way of their thrust-imparting limbs (71a, 72a), arranged in each case in an elongate intermediate space between a friction pad (5) and a pad side (4b) of the respective pad carrier plate (4), wherein the thrust-imparting limbs (71a, 72a) are in each case in contact with the pad side (4b) of the respective pad carrier plate (4) and each exert a thrust force on the brake pad (3, 3') in a direction pointing away from the brake disc (2).

26. Disc brake according to one of the preceding claims,
**characterised in that**
in the lower region of each pad carrier plate (4) there is provided at least one guide element (73) which has a fastening section (73a) and, fastened thereto, a guide section (73b) with a bearing section (73e), wherein the at least one respective guide element is fastened by way of the fastening section (73a) on the thrust side (4b) of the respective pad carrier plate (4) such that the respective bearing section (73e) lies on the respective pad slot base (6d).

27. Brake pad set for a disc brake (10) for a utility vehicle, having a brake calliper (1) which engages over a brake disc (2) and which is in the form of a sliding calliper, and which is fastened to a positionally static brake carrier (6), and which has a central opening (9) over the brake disc (2), and having at least one resetting device by means of which the brake calliper (1) can be reset after a braking-induced displacement and release of the brake,
wherein the brake pad set has at least two brake pads (3, 3'), having in each case one pad carrier plate (4) and one friction pad (5) attached to the pad carrier plate (4), and has a spreading device (8),
wherein the spreading device (8) has spring arms (20),
wherein the spring arms (20) are connected to a retaining bow (21) which can be attached to the brake carrier (60),
wherein the spring arms (20) are formed as two pairs of spring arms (20), which are arranged opposite one another such that they are fastened by way of inner ends to the retaining bow (21),
wherein the inner ends of each pair of spring arms (20) are connected in each case to a hood-type connector (20c) of sleeve-like form,
wherein the hood-type connector (20c) is bent around a central section (26a) of the retaining bow (21) and attached rotatably and displaceably to the central section (26a), which has a circular cross-section,
wherein each spring arm (20) is formed, at the end, with a thrust section (20a) which, in its longitudinal direction, is formed with an elongated hole (22) which is a guide section of the spring arm (20) of the spreading device (8),
wherein the pad carrier plates (4) have, outside the friction pads (5), on at least two abutment regions arranged spaced apart from one another relative to the centre, in each case one abutment surface and one bearing surface (4c),
wherein at each end of a pad carrier plate (4) a pin (24) is fixedly connected to the pad carrier plate (4) and one end of the pin (24) protrudes from the pad carrier plate (4), and wherein the end of the pin (24) extends through the associated elongated hole (22) of the respective thrust section (20a) of a spring arm (20) of the spreading device (8).

28. Brake pad set according to claim 27,
**characterised in that**
the pad carrier plate (4) of an application-side brake pad (3) is equipped with at least one resetting element (40, 46, 50).

29. Brake pad set according to claim 27 or 28,
**characterised in that**
the pad carrier plate (4) of a rear-side brake pad (3') is equipped with at least one resetting element (62, 67).

30. Brake pad set according to claim 27,
**characterised in that**
in each case an elongate intermediate space is arranged between a friction pad (5) and a pad side (4b) of the respective pad carrier plate (4).

31. Brake pad set according to one of claims 27 to 30,
**characterised in that**
the pad carrier plates (4) are equipped, in the lower region on their thrust sides (4b), with at least one guide element (73).

## Revendications

1. Frein (10) à disque d'un véhicule utilitaire, comprenant un étrier (1) de frein, qui chevauche un disque (2) de frein, qui est constitué en étrier coulissant, qui est fixé à un support (6) de frein en emplacement fixe et qui a une ouverture (9) centrale au-dessus du disque (2) de frein, deux garnitures (3, 3') de frein montées dans l'étrier (1) de frein, mobiles en sens contraires, ayant chacune une plaque (4) de support de garniture et une garniture de friction, qui y est fixée, dont une garniture (3) de frein, du côté de l'action ou du côté du serrage, peut être pressée, au moyen d'un dispositif de serrage, par au moins un piston de frein sur le disque (2) de frein, ainsi qu'au moins un dispositif de rappel, par lequel l'étrier (1) de frein, après un déplacement dû au freinage et un desserrage du frein, peut être ramené, le dispositif de rappel ayant un dispositif (8) d'écartement, attaquant les garnitures (3) de frein opposées, agissant de manière équivalente à l'encontre du dispositif respectif de serrage et ayant des éléments d'écartement élastiques attaquant la plaque (4) de support de garniture respective,
le dispositif (8) d'écartement étant disposé dans l'ouverture (9) centrale, les éléments d'écartement attaquant directement ou indirectement à l'extérieur des garnitures (5) de friction au moins deux parties de contact, disposées l'une par rapport à l'autre à distance du milieu, des garnitures (3) de frein, les parties de contact ayant chacune une surface de contact et une surface (4c) d'application, sur lesquelles les éléments d'écartement sont montés avec possibilité de se déplacer, **caractérisé en ce que**
le dispositif (8) d'écartement a des bras (20) de ressort, dont respectivement deux s'appliquent à une plaque (4) de support de garniture associée, les bras (20) de ressort étant reliés entre eux dans la partie centrale de l'ouverture (9), les bras (20) de ressort étant reliés à un arceau (21) de maintien, qui est monté sur le support (6) de frein,
dans lequel les bras (20) de ressort sont constitués sous la forme de deux paires de bras (20) de ressort, les paires étant disposées en opposition dans la direction transversale de l'ouverture (9) de manière à être fixées par leurs extrémités intérieures, tournées vers le milieu de l'ouverture (9), à l'arceau (21) de maintien, leurs extrémités libres extérieures coopérant avec la plaque (4) de support de garniture des garnitures (3, 3') de frein, les extrémités intérieures de chaque paire de bras (20) de ressort étant reliées respectivement à un connecteur (20c) à capot sous forme de manchon, le connecteur (20c) à capot étant recourbé autour d'une partie (26a) centrale de l'arceau (21) de maintien et étant monté tournant et coulissant sur la partie (26a) centrale, qui a une section transversale circulaire,
dans lequel chaque bras (20) de ressort est constitué, du côté de l'extrémité, en ayant une partie (20a) d'application d'une pression, qui est constituée, en ayant dans sa direction longitudinale, une boutonnière (22), qui est une partie de guidage du bras (20) de ressort du dispositif (8) d'écartement, chaque partie (20a) d'application d'une pression s'appliquant respectivement sur une surface (4c) d'application d'une plaque (4) de support de garniture respective, les boutonnières (22) de chaque partie (20a) d'application d'une pression étant en coopération respectivement avec une surface de contact de la plaque (4) de support de garniture,
dans lequel
une broche (24), reliée fixement à la plaque (4) de support de garniture, a la surface de contact, en coopération avec la boutonnière (22) respective, de la plaque (4) de support de garniture, les surfaces (4c) d'application s'étendant chacune tangentiellement au disque (2) de frein et étant dans un plan.

2. Frein (10) à disque suivant la revendication 1,
**caractérisé en ce que**
les éléments d'écartement s'étendent à partir d'une partie centrale au milieu de l'ouverture (9), de l'intérieur vers l'extérieur, vers les parties de contact disposées l'une par rapport à l'autre à distance du milieu.

3. Frein (10) à disque suivant la revendication 2,
**caractérisé en ce que**
les éléments d'écartement s'étendent à partir d'une partie centrale au milieu de l'ouverture (9), de l'intérieur vers l'extérieur, vers les parties de contact disposées les unes par rapport aux autres à même distance du milieu.

4. Frein (10) à disque suivant la revendication 2 ou 3,
**caractérisé en ce que**
la partie centrale de l'ouverture (9) s'étend de part et d'autre d'un milieu virtuel de l'ouverture (9) d'une manière à peu près parallèle au plan du disque (2) de frein en une longueur dans une plage représentant de 30 à 50 % d'un axe longitudinal de l'ouverture (9).

5. Frein (10) à disque suivant l'une des revendications précédentes,
**caractérisé en ce que**
l'arceau (21) de maintien est relié à deux cornes (25) de support de frein délimitant un puit de garniture, l'arceau (21) de maintien étant en forme de C et ayant deux branches (27) d'extrémité opposées, ainsi qu'une branche (26) médiane.

6. Frein (10) à disque suivant la revendication 5,
**caractérisé en ce que**
les branches (27) d'extrémité ont chacune une éclisse (29) dans lesquelles des tenons (30) des cornes (25) de support de frein sont enfichés.

7. Frein (10) à disque suivant la revendication 6,
**caractérisé en ce que**
les branches (27) d'extrémité ont chacune une partie (27a) de fixation, qui est insérée et fixée dans des logements, correspondant à la partie (27a) de fixation, dans la corne (25) de support de frein respective.

8. Frein (10) à disque suivant l'une des revendications précédentes,
**caractérisé en ce que**
le dispositif (8) d'écartement a au moins un élément (40, 46, 50, 62, 67, 69) supplémentaire de rappel qui, supplémentairement au point d'appui/aux points d'appui des bras (20) de ressort, attaque suivant un autre point d'appui la plaque (4) de support de garniture respective d'une garniture (3, 3') de frein.

9. Frein (10) à disque suivant la revendication 8,
**caractérisé en ce que**
le au moins un élément (40) de rappel est, d'un côté (4b) de pression de la plaque (4) de support de garniture, fixé à un tenon (32) de maintien par une partie dans une région inférieure de la plaque (4) de support de garniture d'une garniture (3) de frein du côté du serrage, le au moins un élément (40) de rappel étant monté par une autre partie dans une région inférieure d'une plaque (19) de fond d'une partie (11) de serrage de l'étrier (1) de frein.

10. Frein (10) à disque suivant la revendication 9,
**caractérisé en ce que**
le au moins un élément (40) de rappel est constitué sous la forme d'un élément de ressort ayant une partie (41, 45a) centrale, deux bras (42, 45) de ressort, deux parties (43) de fixation ayant chacune une éclisse (44) en forme de U, la partie (41) centrale étant fixée au tenon (32) de maintien de la plaque (4) de support de garniture et chaque bras (42) de ressort étant monté par la partie (43) de fixation sur la plaque (19) de fond.

11. Frein (10) à disque suivant la revendication 10,
**caractérisé en ce que**
la partie (45a) centrale et les deux bras (45) de ressort sont en un fil métallique pour ressort, la partie (45a) centrale étant fixée à un appui (33) dans une région inférieure de la plaque (4) de support de garniture.

12. Frein (10) à disque suivant la revendication 8,
**caractérisé en ce que**
le au moins un élément (46) de rappel comprend un premier bras (47) de ressort ayant une extrémité (47a) d'encastrement et une liaison, un deuxième bras (48) de ressort ayant une liaison (48a) et une partie (49) de fixation ayant une ouverture (49a), le premier bras (47) de ressort étant fixé, du côté (4b) de pression de la plaque (4) de support de garniture de la garniture (3) de frein du côté du serrage, par son extrémité (47a) d'encastrement à un appui (34), le deuxième bras (48) de ressort étant relié au premier bras (47) de ressort par une liaison (47b) et étant disposé parallèlement à celui-ci et dans lequel la partie (49) de fixation est fixée par son ouverture (49a), avant une ouverture d'un logement (6b) de palier du support (6) de frein co-axialement à celui, entre le support (6) de frein et un longeron de l'étrier (1) de frein.

13. Frein (10) à disque suivant la revendication 8,
**caractérisé en ce que**
le au moins un élément (50) de rappel est disposé, au milieu sous la forme d'un élément (50) de rappel dans la direction verticale, sur le côté (4b) de pression de la plaque (4) de support de garniture de la garniture (3) de frein du côté du serrage et est fixé aussi bien au côté supérieur qu'au côté inférieur de la plaque (4) de support de garniture, une immobilisation en emplacement fixe d'une extrémité de l'élément (50) central de rappel étant formée au milieu sur un connecteur (6c) en pont, du côté du serrage, du support (6) de frein.

14. Frein (10) à disque suivant la revendication 13,
**caractérisé en ce que**
le au moins un élément (50) central de rappel a deux longerons (51) latéraux disposés parallèlement entre eux, dont les extrémités supérieures entourent fixement, sous la forme de parties (51a) de serrage en tant que pince, le côté supérieur de la plaque (4) de support de garniture, les deux longerons (51) étant pourvus à leurs extrémités inférieures de parties (51b) de serrage, qui enserrent fixement, sous la forme de pince, le côté inférieur de la plaque (4) de support de garniture, les longerons (51) étant reliés dans leur partie supérieure par un connecteur (52) transversal et étant reliés dans leur partie inférieure respectivement par un connecteur (53) transversal à respectivement un autre longeron (54), les deux longerons (54) s'étendant chacun parallèlement aux longerons (51) extérieurs vers le haut et étant reliés à leurs extrémités supérieures à un connecteur (55) transversal, sur lequel est monté un longeron (56) central et qui s'étend parallèlement aux autres longerons (51, 54) vers le bas au-delà des parties (51b) de serrage et se termine en une partie (56a) proprement dite de serrage, qui est immobilisée sur le connecteur (6c) en pont, du côté du serrage, du support (1) de frein.

15. Frein (10) à disque suivant la revendication 8,
**caractérisé en ce que**
le au moins un élément (50) de rappel est disposé, au milieu sous la forme d'un élément (50) central de rappel dans la direction verticale sur le côté (4b) de pression de la plaque (4) de support de garniture de la garniture (3) de frein du côté du serrage et est fixé dans une partie du côté inférieur de la plaque (4) de support de garniture, une immobilisation en emplacement fixe d'une extrémité de l'élément (50) central de rappel étant formée sur une extrémité (16a) de maintien du côté du serrage, d'un étrier (16) de maintien, de garniture.

16. Frein (10) à disque suivant la revendication 15,
**caractérisé en ce que**
le au moins un élément (50) central de rappel a un corps (57) de ressort en forme de fil métallique, ayant deux tronçons (58) longitudinaux disposés parallèlement entre eux, les tronçons (58) longitudinaux étant reliés par un connecteur (58a) transversal, le connecteur (58a) transversal étant maintenu dans la partie inférieure de la plaque (4) de support de garniture et des parties (58b, 58c) d'extrémité des tronçons (58) longitudinaux du corps (57) de ressort étant montés par une fixation (59) sur l'extrémité (16a) de maintien, du côté du serrage, de l'étrier (16) de maintien de la garniture.

17. Frein (10) à disque suivant la revendication 15,
**caractérisé en ce que**
le au moins un élément (50) central de rappel a un corps (57) de ressort en forme de fil métallique ayant deux tronçons (58) disposés parallèlement l'un à l'autre, les tronçons (58) longitudinaux étant reliés par un connecteur (58a) transversal, le connecteur (58a) transversal étant maintenu par une fixation (59) et des parties (58b, 58c) d'extrémité des tronçons (58) du corps (57) de ressort étant maintenues dans la partie inférieure de la plaque (4) de support de garniture.

18. Frein (10) à disque suivant la revendication 15,
**caractérisé en ce que**
le au moins un élément (50) central de rappel a un corps (60) de ressort en forme de fil métallique ayant un tronçon (60a) d'extrémité et un tronçon (60b) de fixation, le tronçon (60a) d'extrémité étant maintenu dans la partie inférieure de la plaque (4) de support de garniture et le tronçon (60b) de fixation étant monté sur la au moins une extrémité (16a) de maintien, du côté du serrage, de l'étrier (16) de maintien de la garniture.

19. Frein (10) à disque suivant la revendication 15,
**caractérisé en ce que**
le au moins un élément (50) central de rappel a une plaque (61) de ressort ayant une partie (61a) d'extrémité et une partie (61b) de fixation, la partie (61a) d'extrémité étant maintenue dans la partie inférieure de la plaque (4) de support de garniture et la partie (61b) de fixation étant montée sur l'extrémité (16a) de maintien, du côté du serrage, de l'étrier (16) de maintien de la garniture.

20. Frein (10) à disque suivant la revendication 8, **caractérisé en ce que**
le au moins un élément (62) de rappel est fixé, par une partie dans une région inférieure de la plaque (4) de support de garniture de la garniture (3') de frein du côté arrière, au côté (4b) de pression de la plaque (4) de support de la garniture, le au moins un élément (62) de rappel coopérant par une autre partie avec une corne (25) du support (6) de frein fixe en position.

21. Frein (10) à disque suivant la revendication 20,
**caractérisé en ce que**
l'élément (62) de rappel comprend un tronçon (63) central ayant deux tronçons (63a) de liaison, deux bras (64) de ressort ayant chacun une extrémité (64a) de ressort, deux autres tronçons (65) de liaison et deux autres bras (66) de ressort ayant chacun une extrémité (66a) de serrage, le tronçon (63) central étant monté par les tronçons (63a) de liaison à sa gauche et à sa droite, et les bras (64, 65a) de ressort, qui y sont montés respectivement, dans une partie marginale inférieure du côté (4b) de pression de la plaque (4) de support de garniture, les autres tronçons (65) de liaison étant disposés dans les parties de coin inférieures du côté (4b) de pression de la plaque (4) de support de garniture et étant reliés par les autres bras (66) de ressort verticaux, qui s'étendent respectivement dans une partie latérale du côté (4b) de pression de la plaque (4) de support de garniture, les extrémités (66a) de serrage de chaque autre bras (66) de ressort étant fixées sur la plaque (4) de support de garniture en chevauchant une partie (4d) latérale inclinée, les extrémités (64a) de ressort étant en contact respectivement avec une corne (25) de support de frein.

22. Frein (10) à disque suivant la revendication 8,
**caractérisé en ce que**
le dispositif (8) d'écartement a au moins un autre élément (67) supplémentaire de rappel, qui est disposé entre une partie inférieure de la plaque (4) de support de garniture de la garniture (3) de frein du côté arrière et un arrière (12) de l'étrier (1) de frein.

23. Frein (10) à disque suivant la revendication 22,
**caractérisé en ce que**
le au moins un autre élément (67) de rappel est constitué sous la forme d'une sorte de ressort à lame, ayant un corps (68) de ressort ayant respectivement une extrémité (68a, 68b) de ressort, l'une des extrémités (68a) de ressort étant, dans une partie inférieure de la plaque (4) de support de garniture du côté arrière sur son côté (4b) de pression, articulée à un étrier (39) de maintien et l'autre extrémité (68b) de ressort étant articulée à une partie (12a) de maintien de l'arrière (12) de l'étrier (1) de frein.

24. Frein (10) à disque suivant la revendication 8,
**caractérisé en ce que**
le dispositif (8) d'écartement a au moins un élément (69) supplémentaire de rappel, ayant deux bras (71, 72) de ressort opposés, chaque bras (71, 72) de ressort étant monté par son extrémité supérieure respectivement sur une partie (70) centrale par l'intermédiaire d'un arceau (70a, 70b) de liaison, le tronçon (70) central de l'élément (69) de rappel étant fixé à un tronçon (26) central de l'arceau (21) de maintien du dispositif (8) d'écartement, et respectivement une extrémité libre de chaque bras (71, 72) de ressort étant, par respectivement une branche (71a, 72a) d'application d'une pression, en contact avec la plaque (4) de support de garniture respective d'une garniture (3, 3') de frein.

25. Frein (10) à disque suivant la revendication 24,
**caractérisé en ce que**
les bras (71, 72) de ressort sont montés par leurs branches (71a, 72a) d'application d'une pression respectivement dans un espace intermédiaire oblong entre une garniture (5) de friction et un côté (4b) de garniture de la plaque (4) de support de garniture respective, la branche (71a, 72a) d'application d'une pression étant en contact respectivement avec le côté (4b) de garniture de la plaque (4) de support de garniture respective et respectivement une force de pression dans une direction s'éloignant du disque (2) de frein étant appliquée aux garnitures (3, 3') de frein.

26. Frein (10) à disque suivant l'une des revendications précédentes,
**caractérisé en ce que**
il est prévu dans la partie inférieure de chaque plaque (4) de support de garniture au moins un élément (63) de guidage, qui a une partie (73a) de fixation et une partie (73b) de guidage, qui y est fixée et qui a une partie (73^{e}) d'application, le au moins un élément de guidage respectif étant, par la partie (73a) de fixation fixé du côté (4b) de pression de la plaque (4) de support de garniture respective, de manière à ce que la partie (73a) d'application respective s'applique au fond (6d) de puit de garniture respective.

27. Jeu de garniture de frein pour un frein (10) à disque d'un véhicule utilitaire, comprenant un étrier (1) de frein, qui chevauche un disque (2) de frein, qui est constitué en étrier coulissant, qui est fixé à un support (6) de frein fixe en emplacement et qui a une ouverture (9) centrale au-dessus du disque (2) de frein, ainsi qu'au moins un dispositif de rappel par lequel l'étrier (1) de frein peut, après un dépassement dû au freinage et un desserrage du frein, être ramené,
dans lequel le jeu de garniture de frein a au moins deux garnitures (3, 3') de frein, ayant chacune une plaque (4) de support de garniture et une garniture (5) de friction, qui est montée sur la plaque (4) de support de garniture, et un dispositif (8) d'écartement,
dans lequel le dispositif (8) d'écartement a des bras (20) de ressort,
dans lequel les bras de ressort sont reliés à un arceau (21) de maintien, qui peut être monté sur le support (60) de frein, dans lequel les bras (20) de ressort sont constitués sous la forme de deux paires de bras (20) de ressort, sont disposées en étant opposées de manière à être fixées à l'arceau (21) de maintien par deux extrémités intérieures,
dans lequel les extrémités intérieures de chaque paire de bras (20) de ressort sont reliées respectivement à un connecteur (20c) à capot sous forme de manchon,
dans lequel le connecteur (20c) à capot est retourné autour d'une partie (26a) centrale de l'arceau (21) de maintien et est monté tournant et coulissant sur la partie (26a) centrale, qui a une section transversale circulaire,
dans lequel chaque bras (20) de ressort est constitué, du côté de l'extrémité, en ayant une partie (20a) de pression, qui est constituée en ayant dans sa direction longitudinale une boutonnière (22), qui est une partie de guidage du bras (20) de ressort du dispositif (8) d'écartement,
dans lequel les plaques (4) de support de garniture ont, à l'extérieur des garnitures (5) de friction, sur au moins deux parties de contact disposées l'une par rapport à l'autre à distance par rapport au milieu respectivement, une surface de contact et une surface (4c) d'application,
dans lequel, à chaque extrémité d'une plaque (4) de support de garniture, une broche (24) est reliée fixement à la plaque (4) de support de garniture et une extrémité de la broche (24) est en saillie de la plaque (4) de support de garniture, et dans lequel l'extrémité de la broche (24) s'étend dans la boutonnière (22) associée de la partie (20a) de pression respective d'un bras (20) de ressort du dispositif (8) d'écartement.

28. Jeu de garniture de frein suivant la revendication 27,
**caractérisé en ce que**
la plaque (4) de support de garniture d'une garniture (3) de frein du côté du serrage est pourvue d'au moins un élément (40, 46, 50) de rappel.

29. Jeu de garniture de frein suivant la revendication 27 ou 28,
**caractérisé en ce que**
la plaque (4) de support de garniture d'une garniture (3) de frein du côté arrière est pourvue d'au moins un élément (62, 67) de rappel.

30. Jeu de garniture de frein suivant la revendication 27,
**caractérisé en ce que**
respectivement un espace intermédiaire oblong est disposé entre une garniture (5) de friction et un côté (4b) de garniture de la plaque (4) de support de garniture respective.

31. Jeu de garniture de frein suivant l'une des revendications 27 à 30,
**caractérisé en ce que**
les plaques (4) de support de garniture sont pourvues dans la partie inférieure sur leurs côtés (4b) de pression d'au moins un élément (73) de guidage.
